(19) Europäisches Patentamt
European Patent Office
Office européen des brevets

(11) **EP 4 589 974 A1**

(12) **EUROPEAN PATENT APPLICATION**
published in accordance with Art. 153(4) EPC

(43) Date of publication:
**23.07.2025 Bulletin 2025/30**

(21) Application number: **23880072.6**

(22) Date of filing: **25.09.2023**

(51) International Patent Classification (IPC):
**H04N 23/63** *(2023.01)*  **H04N 23/61** *(2023.01)*

(52) Cooperative Patent Classification (CPC):
**H04N 23/61; H04N 23/635**

(86) International application number:
**PCT/KR2023/014708**

(87) International publication number:
**WO 2024/085493 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.10.2022 KR 20220134478
24.11.2022 KR 20220159799**

(71) Applicant: **Samsung Electronics Co., Ltd.
Suwon-si, Gyeonggi-do 16677 (KR)**

(72) Inventors:
• **OH, Yanggeun**
  **Suwon-si Gyeonggi-do 16677 (KR)**
• **YOUN, Sungwook**
  **Suwon-si Gyeonggi-do 16677 (KR)**
• **JEON, Jaehee**
  **Suwon-si Gyeonggi-do 16677 (KR)**
• **SON, Byungjun**
  **Suwon-si Gyeonggi-do 16677 (KR)**
• **CHOI, Woojhon**
  **Suwon-si Gyeonggi-do 16677 (KR)**

(74) Representative: **Gulde & Partner
Patent- und Rechtsanwaltskanzlei mbB
Berliner Freiheit 2
10785 Berlin (DE)**

(54) **ELECTRONIC DEVICE AND METHOD FOR DISPLAYING PREVIEW IMAGE**

(57)     This electronic device may comprise: a camera; a display; and at least one processor. The at least one processor may: obtain photographing information through the camera; identify, through a framing engine, an object area comprising a designated object on the basis of the photographing object; display, through the display, a preview image corresponding to the photographing information on the basis of the identified object area; display a map view image corresponding to the photographing information; display a first object area on the preview image through the display while the preview image is displayed; and display a preview area, which is for the preview image, and a second object area on the map view image through the display while the map view image is displayed.

OBTAIN SHOOTING INFORMATION THROUGH CAMERA — 501
↓
GENERATE FRAMING IMAGE — 503
↓
OBJECT DETECTION AND TRACKING — 505
↓
IDENTIFY PREVIEW AREA — 507
↓
TRANSFORM COORDINATE INFORMATION OF OBJECT AREA TO POSITION OF FIRST OBJECT AREA AND POSITION OF SECOND OBJECT AREA — 509
↓
GENERATE PREVIEW IMAGE AND MAP VIEW IMAGE — 511
↓
TOUCH INPUT FOR SELECTING ANOTHER OBJECT IS RECEIVED? — 513
— YES → CHANGE OBJECT AREA — 515
— NO ↓
MONITOR WHETHER OBJECT IS CHANGED — 517

FIG. 5

EP 4 589 974 A1

## Description

[Technical Field]

Various embodiments relate to an electronic device and a method for displaying a preview image.

[Background Art]

In order to provide a user with a smooth shooting environment, an electronic device may display a preview image. The electronic device may display an area in which a designated object is located within the preview image together with the preview image.

The above-described information may be provided as a related art for the purpose of helping to understand the present disclosure. No claim or determination is raised as to whether any of the above-described information may be applied as a prior art related to the present disclosure.

[Disclosure]

[Technical Solution]

An electronic device according to an embodiment may comprise a camera, a display, and at least one processor. The at least one processor may be configured to obtain shooting information via the camera. The at least one processor may be configured to identify an object area including a designated object based on the shooting information through a framing engine. The at least one processor may be configured to display, via the display, a preview image corresponding to the shooting information based on the identified object area. The at least one processor may be configured to display, via the display, a map view image corresponding to the shooting information. The at least one processor may be configured to display, via the display, a first object area on the preview image while displaying the preview image. The at least one processor may be configured to display, via the display, a preview area for the preview image and a second object area on the map view image while displaying the map view image. A position of the first object area on the preview image may be determined based on the preview image and coordinate information of the object area. A position of the second object area on the map view image may be determined based on the map view image and the coordinate information of the object area.

A method performed by an electronic device according to an embodiment may comprise obtaining shooting information through a camera. The method may comprise identifying an object area including a designated object based on the shooting information through a framing engine. The method may comprise displaying, via a display, a preview image corresponding to the shooting information based on the identified object area. The method may comprise displaying, via the display, a map view image corresponding to the shooting information. The method may comprise displaying, via the display, a first object area on the preview image while displaying the preview image. The method may comprise displaying, via the display, a preview area for the preview image and a second object area on the map view image while displaying the map view image. A position of the first object area on the preview image may be determined based on the preview image and coordinate information of the object area. A position of the second object area on the map view image may be determined based on the map view image and the coordinate information of the object area.

[Description of the Drawings]

FIG. 1 is a block diagram of an electronic device in a network environment, according to embodiments.
FIG. 2 is a block diagram illustrating a camera module, according to embodiments.
FIG. 3 is a block diagram of a functional configuration of an electronic device, according to embodiments.
FIG. 4 illustrates an example of a disposition of a preview image and a map view image, according to embodiments.
FIG. 5 illustrates a flow of an operation of an electronic device for updating a preview image and a map view image, according to embodiments.
FIG. 6 illustrates a flow of an operation of an electronic device for displaying a preview image and a map view image, according to embodiments.
FIG. 7 illustrates a flow of an operation of an electronic device for identifying an object area, according to embodiments.
FIG. 8 illustrates an example of changing a preview image, according to embodiments.
FIG. 9A illustrates an example of coordinate transformation between object areas, according to embodiments.
FIG. 9B illustrates an example of a coordinate-transformed object area, according to embodiments.
FIG. 10A illustrates an example of coordinate transformation between preview areas, according to embodiments.
FIG. 10B illustrates an example of a coordinate-transformed preview area, according to embodiments.
FIG. 11 illustrates an example of a preview image determined based on coordinate information of an object area, according to embodiments.
FIG. 12 illustrates an example of identification of an object area based on receiving a touch input, according to embodiments.
FIG. 13A illustrates an example of identification of a plurality of object areas based on receiving a touch input, according to embodiments.

FIG. 13B illustrates an example of identification of a plurality of object areas based on receiving a touch input, according to embodiments.

FIG. 14A illustrates an example of identification of a preview area based on receiving a touch input for a zoom-in operation, according to embodiments.

FIG. 14B illustrates an example of movement of a preview area based on receiving a touch input, according to embodiments.

**[Mode for Invention]**

Terms used in the present disclosure are used only to describe a specific embodiment and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware-based approach will be described as an example. However, since the various embodiments of the present disclosure include technology that uses both hardware and software, the various embodiments of the present disclosure do not exclude a software-based approach.

Terms referring to a specified value (a reference value, a threshold value) used in the following description are exemplified for convenience of explanation. Therefore, the present disclosure is not limited to terms described below, and other terms having an equivalent technical meaning may be used. In addition, a term such as '...unit, '...device, '...object, and '...structure', and the like used below, may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' means at least one of elements from A (including A) to B (including B). Hereinafter, 'C' and/or 'D' means including at least one of 'C' and 'D', that is, {'C', 'D', and 'C', and 'D'}.

Prior to describing embodiments of the present disclosure, terms necessary to describe operations of an electronic device according to embodiments are defined.

A preview image may be displayed on a display before shooting an image through a camera. The preview image may be displayed to guide a user to information on an image stored in memory when shooting. A map view image may be displayed on the display to display a preview area when the preview image is an enlarged image. The map view image may be displayed to guide the user to a position of the enlarged preview image for an entire image. A framing image may be obtained by reducing or enlarging an edit image. It may be an image inputted to a framing engine. The edit image may be an image obtained in accordance with the designated aspect ratio from shooting information obtained through the camera. An object may be a portion of the image corresponding to a type of a designated subject. An object area may be a portion of the image including the object on the edit image. A framing object area may be a portion of the image including the object on the framing image. A first object area may be a portion of the image including the object on the preview image. A second object area may be a portion of the image including the object on a map view image. An edit object area may be a portion of the image including the object on the edit image. The preview area may be a portion in which the preview image is displayed on the map view image. A framing preview area may be a rectangular portion having a minimum size including the framing object area on the framing image. An edit preview area may be a portion of the edit image corresponding to the framing preview area.

Hereinafter, various embodiments disclosed in the present document will be described with reference to the accompanying drawings. For convenience of explanation, a size of components illustrated in the drawings may be exaggerated or reduced, and the present invention is not necessarily limited to those illustrated.

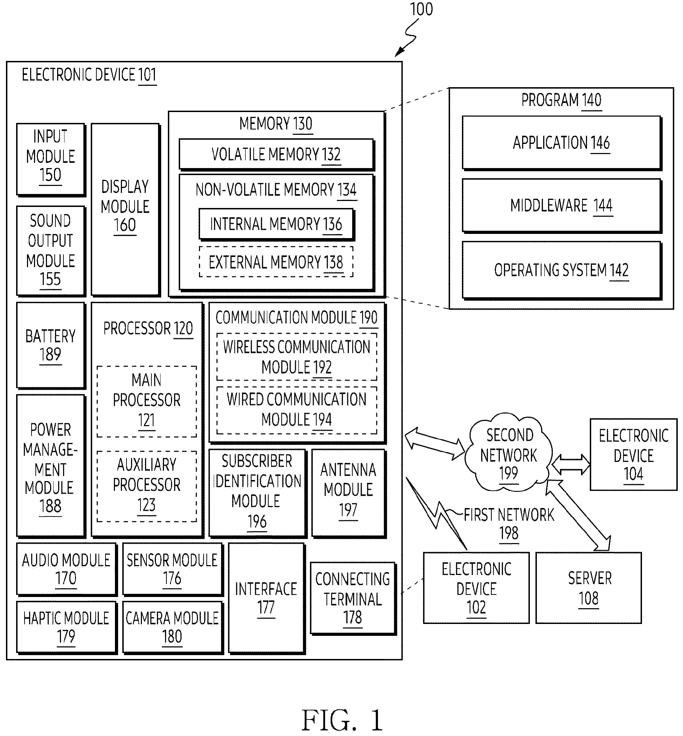

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

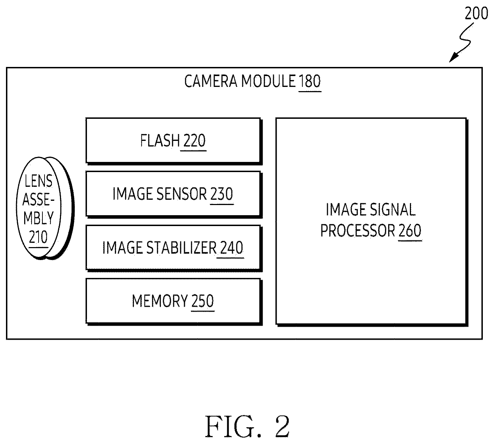

Fig. 2 is a block diagram 200 illustrating the camera module 180 according to various embodiments.

Referring to Fig. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer.

The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

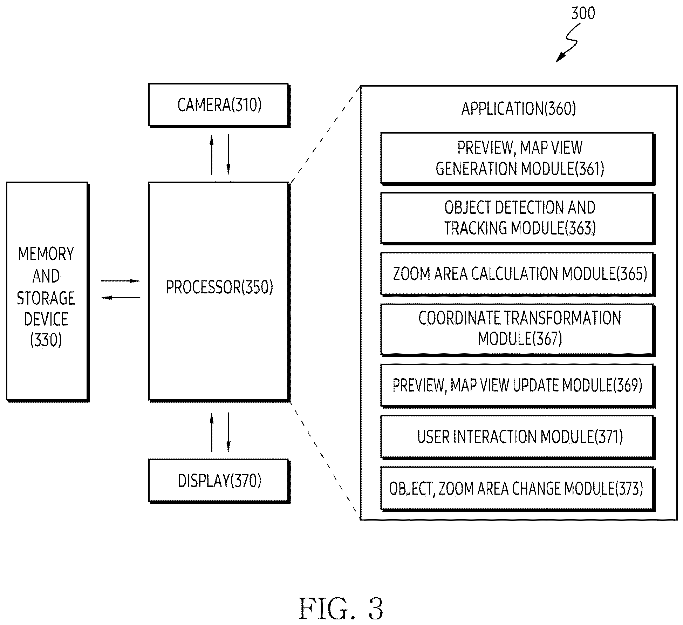

FIG. 3 is a block diagram of a functional configuration of an electronic device, according to embodiments. An electronic device 300 of FIG. 3 is at least partially similar to the electronic device 101 of FIG. 1, or may further include other embodiments of the electronic device.

Referring to FIG. 3, the electronic device 300 (e.g., the electronic device 101 of FIG. 1) may include a camera 310 (e.g., the camera module 180 of FIG. 1) for image shooting, a memory and a storage device 330 (e.g., the memory 130 of FIG. 1), a display 370 (e.g., the display module 160 of FIG. 1), and a processor 350 for performing an operation of an application 360. The application 360 may include a preview, map view generation module 361, an object detection and tracking module 363, a zoom area calculation module 365, a coordinate transformation module 367, a preview, map view update module 269, a user interaction module 371, a tracking target, and a zoom area change module 373.

According to various embodiments, the application 360 may be implemented in a form of hardware, software, or a combination of the hardware and the software. When implemented as the software, a computer readable storage medium for storing one or more programs (a software module) may be provided. The one or more programs stored in the computer readable storage medium are configured for execution by one or more processors in the electronic device. The one or more programs include instructions that cause the electronic device to execute methods in accordance with claims or embodiments described in the present disclosure.

These programs (the software module, or the software) may be stored in random access memory, nonvolatile memory including flash memory, read only memory (ROM), electrically erasable programmable read only memory (EEPROM), a magnetic disc storage device, a compact disc-ROM (CD-ROM), digital versatile discs (DVDs), or another type of an optical storage device, or a magnetic cassette. Alternatively, it may be stored in memory configured with some or all combinations thereof. Also, a plurality of configured memories may be included.

The preview and the map view generation module 361 may generate a preview image and a map view image. The preview image may be displayed on the display 370 before shooting an image through the camera 310. The preview image may be displayed to guide a user to information on the image stored in memory when shooting. When the preview image is an enlarged image, the map view image may be displayed on the display 370 to display the preview area. The map view image may be displayed to guide the user to a position of the enlarged preview image for an entire image. The preview image and the map view image may be disposed in an arbitrary area of the display 370. According to an embodiment, the preview image and the map view image may be disposed not to overlap. According to another embodiment, the preview image and the map view image may be disposed to overlap each other. For example, the preview image may be displayed in a wide area on the display, and the map view image may be displayed on the preview image. A width of a display in which the map view image is displayed may be smaller than a width of a display in which the preview image is displayed.

The object detection and tracking module 363 may detect a designated object in a framing image. The object may be a portion of the image corresponding to a type of a designated subject. For example, the object may correspond to a human face. The object may correspond to a body. The object may correspond to a part of the body. The object may correspond to a license plate. The object may correspond to an animal. The object may be plural.

The framing image may be obtained by reducing or enlarging an edit image while maintaining a designated aspect ratio. The edit image may be an image obtained according to the designated aspect ratio from shooting information obtained through the camera 310. For example, an aspect ratio of the shooting information obtained through the camera 310 may be 4:3. The edit image may be generated based on the shooting information at a ratio of 16:9 that is the designated aspect ratio. The edit image may be an image in which a portion of the shooting information is removed so that the image of the shooting information becomes at 16:9 that is the designated aspect ratio. The framing image may be obtained by reducing or enlarging the edit image. The framing image may satisfy the ratio of 16:9 that is the designated aspect ratio.

The object detection and tracking module 363 may identify and track an area in which the object is detected within the framing image. Coordinate information of a framing object area, which is an area in which the object is detected, may be inputted to the zoom area calculation module 365 to identify the preview area.

The zoom area calculation module 365 may identify the preview area. The preview area may be a portion in which the preview image is displayed on the map view image. Based on a position of a framing preview area, the preview area may be identified. The preview area may correspond to an entire map view image.

The framing preview area may be a rectangular portion having a minimum size including the framing object area on the framing image. The preview area may include a second object area on the map view image. For example, the framing preview area may include an area corresponding to a human face on the framing image. The preview area may include an area corresponding to a human face on the map view image. The preview area may be a rectangular area having a minimum size including the second object area with respect to the map view image.

The coordinate transformation module 367 may transform coordinates between the preview image and the application, the map view image and the application, and a framing engine and the application. Zoom-in or zoom-out may be applied to the preview image. The designated object may be displayed on the preview image. A map view may display the entire image generated based on preview area information currently indicated in a preview and the designated aspect ratio. In addition, it may display all designated objects. Additionally, it may include an object that corresponds to a designated type of object, but may not necessarily be included in the preview image by a user input. The at least one processor 120 may generate the edit image by converting the image included in the shooting information received through the camera. The at least one processor 120 may convert the edit image and display it in the preview area and the map view area within the display. According to an embodiment, the framing engine may perform object detection and tracking, object area identification, and framing preview area identification based on the edit image. Since the object detection and tracking, the object area identification, and the framing preview area identification are performed by the framing engine, a coordinate change between the edit image and the framing engine may be required. Since the object detection and tracking, the object area identification, and the framing preview area identification are performed by the framing engine, a coordinate change between the edit image and the preview image may be required. Since the object detection and tracking, the object area identification, and the framing preview area identification are performed by the framing engine, a coordinate change between the map view image and the framing engine may be required.

The preview and map view update module 369 may update the preview and the map view when a new object is detected within the framing image. The preview and map view update module 369 may update the preview and the map view when the framing object area is changed within the framing image. The preview and map view update module 369 may update the preview and the map view when the framing preview area is changed within the framing image. The preview and map view update module 369 may update the preview and the map view based on the coordinate-transformed zoom information / coordinate information of the object area, transferred from the zoom area calculation module 365.

The user interaction module 371 may change the preview image and the preview area or an area of the preview image based on a user input. The user input may be a touch input, gesture recognition, or sound recognition. The touch input may be received from the preview image and the map view image. The touch input may be received from the preview image. The touch input may be received from the map view image. A touched point in the preview image and a touched point in the map view image may correspond to each other. In the preview image, the touch input may be received in an area range corresponding to the preview area of the map view image. In the map view image, the touch input may be received in an area range corresponding to the edit image. According to an embodiment, when a designated gesture is identified, the at least one processor 120 may set a corresponding object area as an object vitally included in the preview image. According to another embodiment, when the designated gesture is identified, the at least one processor 120 may set the corresponding object area as an object that is not vitally included in the preview image. According to an embodiment, when a designated sound signal is identified, the at least one processor 120 may set a corresponding object area as an object vitally included in the preview image. According to another embodiment, when the designated sound signal is identified, the at least one processor 120 may set the corresponding object area as an object that is not vitally included in the preview image.

The object and zoom area change module 373 may monitor whether a new object is detected within the framing image, monitor whether the object area is changed, and monitor whether the preview area is changed. When the new object is detected within the framing image, the object and zoom area change module 373 may input coordinate information of the object area to the preview and map view update module 369. When the framing object area is changed within the framing image, the coordinate information of the object area may be inputted to the preview and map view update module 369. When the preview area is changed, coordinate information of the preview area may be inputted to the preview and map view update module 369.

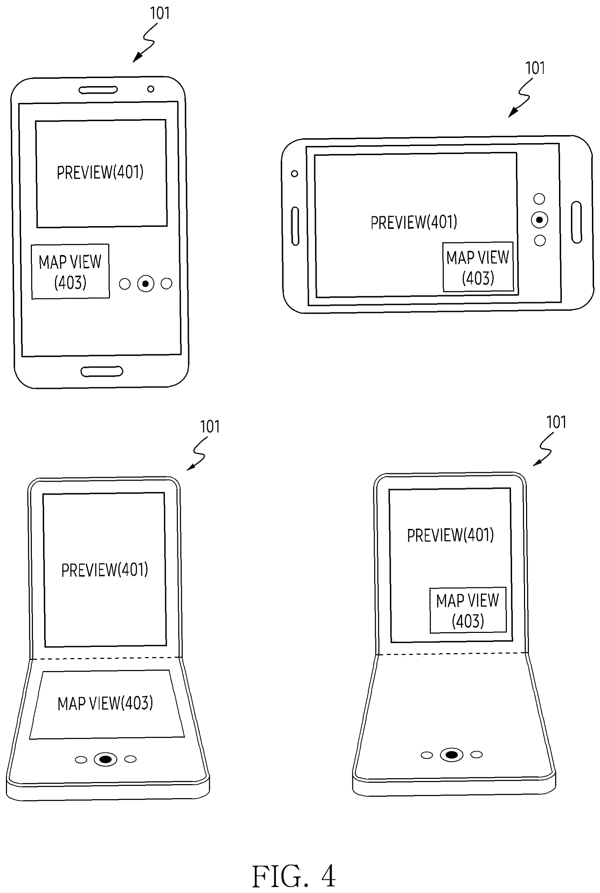

FIG. 4 illustrates an example of a disposition of a preview image and a map view image, according to embodiments.

Referring to FIG. 4, an electronic device 101 may display a preview image 401 and a map view image 403 through a display based on shooting information obtained by a camera. According to an embodiment, the electronic device 101 may be a foldable electronic device. According to another embodiment, the electronic device 101 may be in a bar type. The preview image 401 may be displayed on a display (e.g., the display 370 of FIG. 3) before shooting an image through the camera (e.g., the camera 310 of FIG. 3). The preview image 401 may be displayed to guide a user to information on the image stored in memory when shooting. The map view image 403 may be displayed on the display 370 to display the preview area when the preview image 401 is an enlarged image. The map view image 403 may be displayed to guide the user to a position of the enlarged preview image 401 for an entire image.

According to embodiments, the preview image 401 and the map view image 403 may be disposed in an arbitrary area of the display 370.

According to an embodiment, the preview image 401 and the map view image 403 may be disposed not to overlap. For example, the preview image 401 may be displayed on a portion of the display 370, and the map view image 403 may be displayed on another portion of the display 370. A width of an area of the display 370 in which the map view image 403 is displayed may be smaller than a width of an area of the display 370 in which the preview image 401 is displayed. This is because the map view image 401 is displayed to guide a relative position of the preview image 401 with respect to the entire image. The preview image 403 may be an image stored when shooting. The map view image 403 may be capable of guiding the user to the preview image 401 even with a smaller size than the preview image 401. Accordingly, a size of an area of the map view image 403 may be smaller than a size of an area of the preview image 401.

According to another embodiment, the preview image 401 and the map view image 403 may be disposed to overlap each other. For example, the preview image 401 may be displayed on an entire display area of the display 370, and the map view image 403 may be displayed on the preview image 401. The width of the area of the display 370 in which the map view image 403 is displayed may be smaller than the width of the area of the display 370 in which the preview image 401 is displayed. This is because the map view image 403 may be capable of guiding the user to the preview image 401 even with a smaller size than the preview image 401.

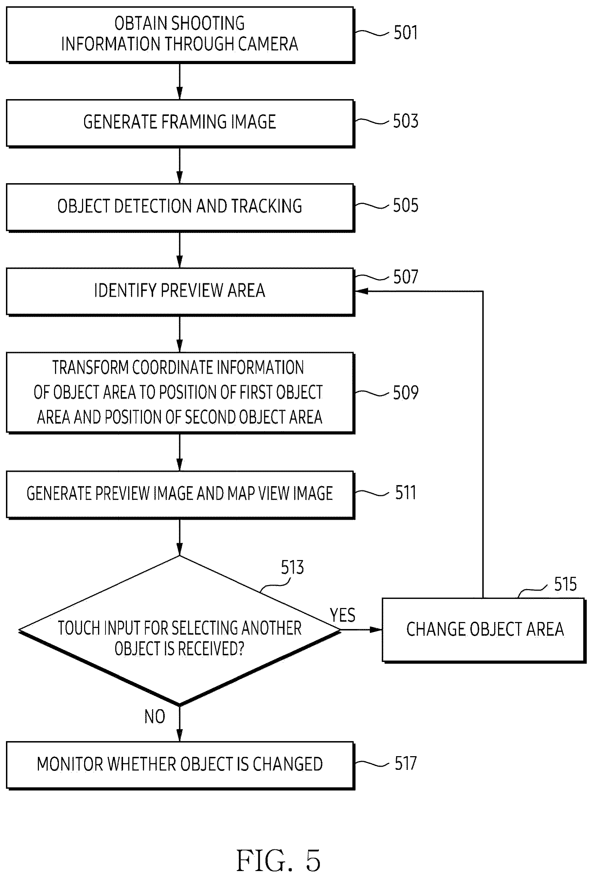

FIG. 5 illustrates a flow of an operation of an electronic device (the electronic device 101) for updating a preview image and a map view image, according to embodiments. Operations to be described below may be performed by at least one processor (e.g., the processor 120 of FIG. 1) of the electronic device.

Referring to FIG. 5, in operation 501, the at least one processor 120 may obtain shooting information through a camera (e.g., the camera 310 of FIG. 3). The at least one processor 120 may not store an image included in the shooting information. The shooting information may include an image having an aspect ratio of 4:3. The at least one processor 120 may transfer the shooting information from the camera to an application. The shooting information may be obtained at an application layer.

In operation 503, the at least one processor 120 may generate a framing image. According to an embodiment, the at least one processor 120 may generate an edit image in accordance with a designated aspect ratio from the shooting information. For example, the at least one processor 120 may generate the edit image having an aspect ratio of 16:9 based on the image having an aspect ratio of 4:3 included in the shooting information. The at least one processor 120 may generate the edit image having an aspect ratio of 16:9 by cropping a portion of the image having an aspect ratio of 4:3 included in the shooting information. In order to easily convert the image obtained from the camera into the framing image, the preview image, or the map view image, the edit image may be generated based on the image included in the shooting information. This is because an aspect ratio of the framing image, the preview image, and the map view image is the same.

According to an embodiment, the at least one processor 120 may generate the framing image for a framing engine based on the edit image. For example, the framing image may be obtained through reduction or enlargement of the edit image. An aspect ratio of the framing image may match an aspect ratio of the edit image.

In operation 505, the at least one processor 120 may perform object detection and tracking. According to an embodiment, the at least one processor 120 may detect a designated object within the framing image through the framing engine. The at least one processor 120 may identify and track a framing object area included in the framing image through the framing engine. The framing image may be obtained through reduction or enlargement of the edit image. The object may be a portion of the image corresponding to a type of a designated subject. The framing object area may be a portion of the framing image including the object. For example, the object may correspond to a human face. The object may correspond to a body. The object may correspond to a part of the body. The object may correspond to a license plate. The object may correspond to an animal. The object may be plural. The at least one processor 120 may identify the framing object area within the framing image and perform tracking on the framing object area with respect to a plurality of framing images. The object area may be obtained at the application layer.

In operation 507, the at least one processor 120 may identify a preview area. The preview area may be a portion in which the preview image is displayed on the map view image. According to an embodiment, the at least one processor 120 may identify a framing preview area based on the object area through the framing engine. The framing preview area may be a rectangular portion having a minimum size including the framing object area on the framing image. The framing preview area may be included in the framing image. The at least one processor 120 may identify an edit preview area based on the framing preview area. The at least one processor 120 may identify the preview area to be displayed on the map view image based on the edit preview area. The at least one processor 120 may transform coordinate information of the framing preview area included in the framing image to coordinate information of the edit preview area included in the edit image. The at least one processor 120 may transform coordinate information of the preview area included in the edit image to coordinate information of the preview area included in the map view image.

In operation 509, the at least one processor 120 may transform coordinate information of the object area to a position of a first object area and a position of a second object area. The coordinate information of the object area may be coordinate information of an object area included in the edit image. According to an embodiment, the at least one processor 120 may transform coordinate information of the framing object area included in the framing image into the coordinate information of the object area included in the edit image. The at least one processor 120 may transform coordinate information of the object area included in the edit image to coordinate information of the first object area included in the preview image. The at least one processor 120 may transform the coordinate information of the object area to the coordinate information of the first object area to display the first object area corresponding to the designated object on the preview image. This is because a reduction or enlargement ratio may be different even though an aspect ratio of the framing image, the edit image, and the preview image is the same. The position of the first object area may be determined based on a magnification of the edit image and the preview image, and the coordinate information of the object area. The at least one processor 120 may transform the coordinate information of the object area included in the edit image to coordinate information of the second object area included in the map view image. The at least one processor 120 may transform the coordinate information of the object area to the coordinate of the second object area to display the second object area corresponding to the designated object on the map view image. This is because the reduction or enlargement ratio may be different even though the aspect ratio of the framing image, the edit image, and the map view image is the same. The position of the second object area may be determined based on a magnification of the edit image and the map view image, and the coordinate information of the object area.

In operation 511, the at least one processor 120 may generate the preview image and the map view image. According to an embodiment, the at least one processor 120 may generate the preview image and the map view image based on the edit image. For example, the preview image may be obtained by reducing or enlarging a portion of the edit image. The aspect ratio of the preview image may be equal to the aspect ratio of the edit image. The portion of the edit image may be the edit preview area. The edit preview area may include the object area. The at least one processor 120 may generate the preview image based on the edit preview area. The preview image may enlarge an image portion including the objects so that the user may easily identify the objects.

For example, the map view image may be obtained by reducing or enlarging the edit image. The aspect ratio of the map view image may match the aspect ratio of the edit image. For example, the aspect ratio of the edit image, the aspect ratio of the map view image, and the aspect ratio of the preview image may all be the same as 16:9. The map view image may indicate the entire edit image, not a portion, to indicate a position of the preview area.

The first object area may be displayed on the preview image based on the position of the first object area. The second object area may be displayed on the map view image based on the position of the second object area. The preview area may be displayed on the map view image based on the coordinate information of the preview area. This is for displaying the position of the preview image on the map view image.

In operation 513, the at least one processor 120 may identify whether a touch input for selecting another object is received. In case that the touch input for selecting the other object is received, the at least one processor 120 may perform operation 515. In case that the touch input for selecting the other object is not received, the at least one processor 120 may perform operation 517.

According to an embodiment, the at least one processor 120 may designate an object based on the touch input. For example, the at least one processor 120 may designate the object included in the preview image. The preview image may include the object designated by the user, and may enlarge and display an image portion including the designated object. According to an embodiment, the user may further designate an object to be included in the preview image through the touch input. For example, the user may further designate an object corresponding to faces of children during a school arts performance. For example, the user may further designate objects corresponding to faces of a family in an amusement park. According to another embodiment, the at least one processor 120 may designate an object that does not affect the preview image. For example, during the school arts performance, the user may exclude objects corresponding to faces rather than the faces of the children from a target object. For example, in the amusement park, the user may exclude objects that do not correspond to the faces of the family from a target object.

According to an embodiment, the touch input may be received on a display displaying the map view image. For example, on the display, the touch input may be received in the second object area within the map view image. The at least one processor 120 may include the second object area in which the touch input is received as a target object considered when identifying the preview area. For another example, the at least one processor 120 may exclude the second object area in which the touch input is received from the target object considered when identifying the preview area.

According to another embodiment, the touch input may be received on a display displaying the preview image. For example, on the display, the touch input may be received in the first object area within the preview image. The at least one processor 120 may include the first object area in which the touch input is received as a target object considered when identifying the preview area. For another example, the at least one processor 120 may exclude the first object area in which the touch input is received from the target object considered when identifying the preview area.

According to an embodiment, when the touch input for selecting the other object or the touch input for excluding the object is received, the object area may be changed based on the touch input.

According to an embodiment, the at least one processor 120 may receive the touch input for selecting the other object. The at least one processor 120 may identify the changed other object area based on receiving the touch input. The at least one processor 120 may identify a new preview area based on the other object area. The at least one processor 120 may display a new preview image through the display based on the new preview area. The at least one processor 120 may display a third object area on the new preview image through the display while displaying the new preview image. A position of the third object area on the preview image may be determined based on the new preview image and a coordinate area of the other object area. The at least one processor 120 may display, through the display, the new preview area for the new preview image and a fourth object area on a new map view image while displaying the new map view image. A position of the fourth object area on the map view image may be determined based on the map view image and coordinate information of the other object area.

In operation 515, the at least one processor 120 may change the object area. The at least one processor 120 may identify the preview area again based on the object area. The preview area may include the object area. According to an embodiment, the at least one processor 120 may designate an object based on the touch input. For example, the at least one processor 120 may designate the object included in the preview image. For example, the user may designate an object corresponding to a face of a child during the school arts performance. The at least one processor 120 may display a preview image in which the face of the designated child is enlarged through a display (e.g., the display 370 of FIG. 3) by tracking the face of the designated child. Faces of other students may not be included in the preview image since those are human faces but are not the designated objects. For example, the user may designate objects corresponding to the faces of the family in the amusement park. The at least one processor 120 may indicate a preview image in which the faces of the designated families are enlarged through the display 370 by tracking the faces of the designated families. Faces of other people may not be included in the preview image, since they are human faces, but are not the designated objects. According to another embodiment, the at least one processor 120 may designate an object that does not affect the preview image. For example, when obtaining an image including a turtle in a zoo, the user may set objects corresponding to ostrich included in the same frame not to affect the preview image. The at least one processor 120 may indicate a preview image in which the turtles are enlarged on the display 370 by tracking objects corresponding to the turtles. In the at least one processor 120, even though the objects corresponding to the ostrich are included in the preview image, but since they are not the designated objects, they may not be included in the preview image.

In operation 517, the at least one processor 120 may monitor whether the object is changed. When the object is changed, the object area may be changed. When the object area is changed, the preview area within the map view image may be changed. When the object area is changed, the object included in the preview image may be changed. Therefore, the changed preview image and map view image may be displayed through the display 370.

According to an embodiment, the at least one processor may include an NPU and a CPU. According to an embodiment, the NPU may include the framing engine. According to an embodiment, the framing engine may be operated using the CPU and the NPU.

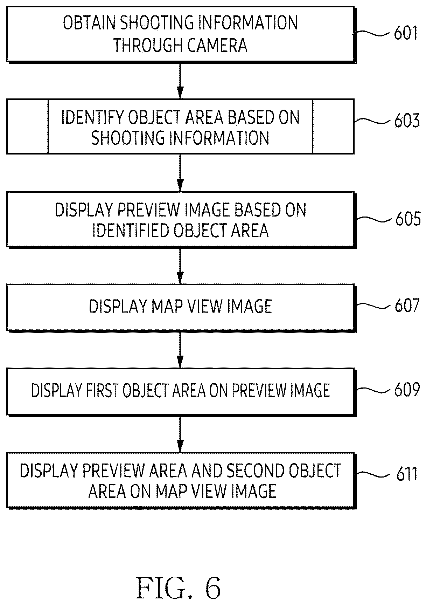

FIG. 6 illustrates a flow of an operation of an electronic device (e.g., the electronic device 101) for displaying a preview image and a map view image, according to embodiments. Operations to be described below may be performed by at least one processor (e.g., the processor 120 of FIG. 1) of the electronic device.

Referring to FIG. 6, in operation 601, the at least one processor 120 may obtain shooting information through a camera (e.g., the camera 310 of FIG. 3). The at least one processor 120 may not store an image included in the shooting information. The shooting information may include an image having an aspect ratio of 4:3. The at least one processor 120 may transfer the shooting information from the camera to an application. The shooting information may be obtained at an application layer.

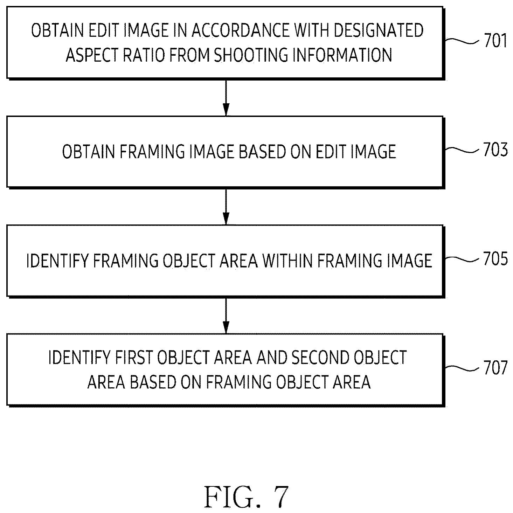

In operation 603, the at least one processor 120 may identify an object area based on the shooting information. The at least one processor 120 may generate a framing image through a framing engine based on the shooting information. According to an embodiment, the at least one processor 120 may detect a designated object within the framing image through the framing engine. The at least one processor 120 may identify and track a framing object area included in the framing image through the framing engine. The framing image may be obtained through reduction or enlargement of the edit image. The object may be a portion of the image corresponding to a type of a designated subject. The framing object area may be a portion of the framing image including the object. For example, the object may correspond to a human face. The object may correspond to a body. The object may correspond to a part of the body. The object may correspond to a license plate. The object may correspond to an animal. The object may be plural. The at least one processor 120 may identify the framing object area within the framing image and perform tracking on the framing object area with respect to a plurality of framing images. The operation 603 may refer to an operation flow of an electronic device of FIG. 7.

In operation 605, the at least one processor 120 may display a preview image based on the identified object area.

According to an embodiment, the at least one processor 120 may identify a framing preview area based on the object area through the framing engine. The framing preview area may be a rectangular portion having a minimum size including the framing object area on the framing image. The framing preview area may be included in the framing image. The at least one processor 120 may identify an edit preview area based on the framing preview area. The at least one processor 120 may transform coordinate information of the framing preview area included in the framing image to coordinate information of the edit preview area included in the edit image.

The at least one processor 120 may obtain the preview image by reducing or enlarging the edit preview area. This is because the edit preview area is a rectangular portion having a minimum size including the object area. An aspect ratio of the preview image may be equal to an aspect ratio of the edit image. For example, the aspect ratio of the edit image and the aspect ratio of the preview image may be the same as 16:9. The at least one processor 120 may obtain the enlarged preview image while including designated objects. The object area may be obtained at the application layer.

In operation 607, the at least one processor 120 may display a map view image. According to an embodiment, the at least one processor 120 may generate the map view image based on the edit image. For example, the map view image may be obtained by reducing or enlarging the edit image. An aspect ratio of the map view image may match the aspect ratio of the edit image. For example, the aspect ratio of the edit image, the aspect ratio of the map view image, and the aspect ratio of the preview image may all be the same as 16:9. The map view image may indicate the entire edit image, not a portion, to indicate a position of the preview area.

In operation 609, the at least one processor 120 may display a first object area on the preview image. The at least one processor 120 may transform coordinate information of the object area to a position of the first object area. The coordinate information of the object area may be coordinate information of the object area included in the edit image. According to an embodiment, the at least one processor 120 may transform coordinate information of the framing object area included in the framing image to the coordinate information of the object area included in the edit image. The at least one processor 120 may transform the coordinate information of the object area included in the edit image to coordinate information of the first object area included in the preview image. This is for displaying the first object area corresponding to the designated object on the preview image. The position of the first object area may be determined based on a magnification of the edit image and the preview image, and the coordinate information of the object area.

In operation 611, the at least one processor 120 may display the preview area and a second object area on the map view image. The at least one processor 120 may transform the coordinate information of the object area to a position of the second object area. The coordinate information of the object area may be the coordinate information of the object area included in the edit image. According to an embodiment, the at least one processor 120 may transform the coordinate information of the framing object area included in the framing image to the coordinate information of the object area included in the edit image. The at least one processor 120 may transform the coordinate information of the object area included in the edit image to the coordinate information of the second object area included in the map view image. This is for displaying the second object area corresponding to the designated object on the map view image. The position of the second object area may be determined based on a magnification of the edit image and the map view image, and the coordinate information of the object area.

The at least one processor 120 may display the preview area on the map view image based on the edit preview area. The at least one processor 120 may identify the framing object area included in the framing image through the framing engine. The at least one processor 120 may identify the framing preview area based on the framing object area. The at least one processor 120 may change the coordinate information of the framing preview area within the framing image to the coordinate information of the edit preview area within the edit image. The at least one processor 120 may change the coordinate information of the edit preview area within the edit image to coordinate information of the preview area on the map view image. This is because a reduction or enlargement ratio may be different even though the aspect ratio of the framing image, the edit image, and the map view image is the same. The at least one processor 120 may display the preview area on the map view image based on the coordinate information of the preview area. The at least one processor 120 may display the preview area on the map view image to indicate the position of the preview area with respect to the entire image.

FIG. 7 illustrates a flow of an operation of an electronic device (e.g., the electronic device 101) for identifying an object area, according to embodiments.

The flow of the operation of FIG. 7 may be referred to the operation 603 of FIG. 6 for obtaining an edit image based on shooting information.

Referring to FIG. 7, in operation 701, the at least one processor 120 may obtain the edit image in accordance with a designated aspect ratio from the shooting information. According to an embodiment, the at least one processor 120 may generate the edit image in accordance with the designated aspect ratio from the shooting information. For example, the at least one processor 120 may generate the edit image having an aspect ratio of 16:9 based on an image having an aspect ratio of 4:3 included in the shooting information. The at least one processor 120 may generate the edit image having an aspect ratio of 16:9 by cropping a portion of the image having an aspect ratio of 4:3 included in the shooting information. In order to easily convert the image obtained from the camera into the framing image, the preview image, or the map view image, the edit image may be generated based on the image included in the shooting information. This is because an aspect ratio of the framing image, the preview image, and the map view image is the same. The shooting information may be obtained at an application layer.

In operation 703, the at least one processor 120 may obtain the framing image based on the edit image. According to an embodiment, the at least one processor 120 may generate the framing image for a framing engine based on the edit image. For example, the framing image may be obtained through reduction or enlargement of the edit image. For example, the framing image may be generated by reducing the edit image by two times. The aspect ratio of the framing image may match the aspect ratio of the edit image.

In operation 705, the at least one processor 120 may identify a framing object area within the framing image. The at least one processor 120 may identify the framing object area to identify an object of interest to the user and automatically enlarge the object. The object may be a portion of the image corresponding to a type of a designated subject. For example, the object may correspond to a human face. The object may correspond to a body. The object may correspond to a part of the body. The object may correspond to a license plate. The object may correspond to an animal. The object may be plural. The at least one processor 120 may detect a designated object in the framing image through the framing engine. The at least one processor 120 may identify the framing object area within the framing image through the framing engine. The at least one processor 120 may perform tracking on the framing object area with respect to a plurality of framing images through the framing engine. The framing object area may be obtained at the application layer.

In operation 707, the at least one processor 120 may identify a first object area and a second object area based on the framing object area.

The at least one processor 120 may transform coordinate information of the framing object area within the framing image to coordinate information of the object area within the edit image. The at least one processor 120 may transform the coordinate information of the object area within the edit image to coordinate information of the first object area within the preview image. This is because a reduction or enlargement ratio may be different even though the aspect ratio of the framing image, the edit image, and the preview image is the same. A position of the first object area may be determined based on a magnification of the edit image and the preview image, and the coordinate information of the object area.

The at least one processor 120 may transform the coordinate information of the framing object area within the framing image to the coordinate information of the object area in the edit image. The at least one processor 120 may transform the coordinate information of the object area within the map view image to coordinate information of the second object area within the map view image. This is because the reduction or enlargement ratio may be different even though the aspect ratio of the framing image, the edit image, and the map view image is the same. A position of the second object area may be determined based on a magnification of the edit image and the map view image, and the coordinate information of the object area.

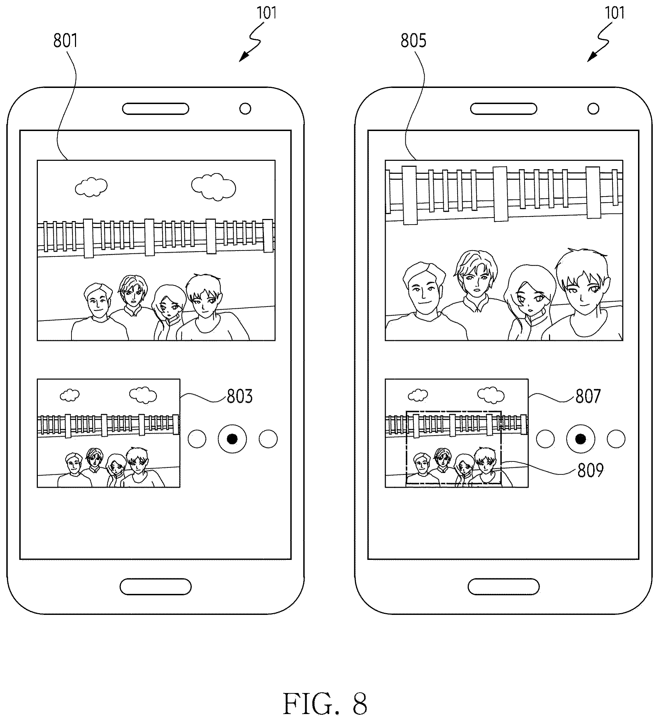

FIG. 8 illustrates an example of changing a preview image, according to embodiments.

Referring to FIG. 8, an electronic device 101 may display a preview image 801 in which an entire map view image 803 is enlarged and the map view image 803, in accordance with shooting information through a display. The at least one processor 120 may display a preview area on the map view image 803 to easily find the preview area corresponding to the preview image 801 on the map view image 803. The preview area within the map view image corresponding to the preview image 801 may be the entire map view image 803. When the preview area corresponds to the entire map view image 803, a user may not need to easily find the preview area. Accordingly, when the preview area corresponds to the entire map view image 803, the preview area may not be displayed on the map view image.

The electronic device 101 may display a preview image 805 in which a portion of a map view image 807 is enlarged and the map view image 807 in accordance with the shooting information. The at least one processor 120 may display the map view image 807 to easily find a preview area 809 corresponding to the preview image 805 on the map view image 807. The preview area 809 within the map view image 807 corresponding to the preview image 805 may be a portion of the map view image 807.

According to an embodiment, the preview area may be determined in accordance with a zoom-in operation of the camera executed based on identifying the object area. The preview image 805 may be generated based on the preview area. When the object area is identified, a framing engine may set a framing preview area to a minimum rectangular range including the object area in order to reflect an interest of the user in the object area. The at least one processor 120 may obtain the edit preview area based on the framing preview area. The at least one processor 120 may generate the preview image 805 by enlarging the edit preview area. The at least one processor 120 may display the preview area within the map view image 807 based on the edit preview area.

According to another embodiment, the preview area may be determined in accordance with the zoom-in operation of the camera executed according to identifying a user input. The user input may be a touch input. The user input may be a drag input. The at least one processor 120 may be determined in accordance with the zoom-in operation of the camera to reflect an intention of the user regardless of identification of the object area. The at least one processor 120 may identify the edit preview area based on the preview image 805. The at least one processor 120 may display the preview area within the map view image 807 based on the edit preview area.

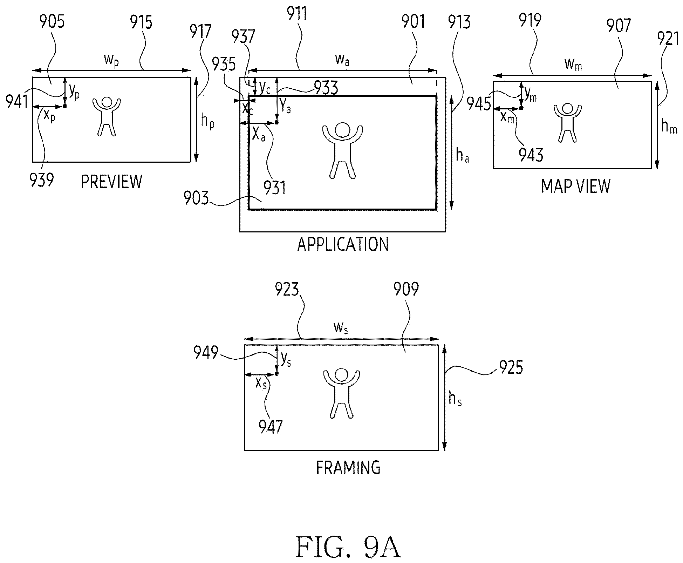

FIG. 9A illustrates an example of coordinate transformation between object areas, according to embodiments. A case where a preview area within a map view image matches the map view image is illustrated.

Referring to FIG. 9A, at least one processor (e.g., the processor 120 of FIG. 1) may generate an edit image 903 based on shooting information 901. A preview image 905 may be displayed on a display (e.g., the display 370 of FIG. 3) before shooting an image through a camera (e.g., the camera 310 of FIG. 3). The preview image 905 may be displayed to guide information on the image stored in memory when shooting. When the preview image is an enlarged image, the map view image 907 may be displayed on the display 370 to display the preview area. The map view image 907 may be displayed to guide the user to a position of the enlarged preview image 905 for an entire image.

An x-axis length 911 of the edit image 903 may be $w_a$. A y-axis length 913 of the edit image 903 may be $h_a$. An x-axis length 915 of the preview image 905 may be $w_p$. A y-axis length 917 of the edit image 905 may be $h_p$. An x-axis length 919 of the map view image 907 may be $w_m$. A y-axis length 921 of the map view image 907 may be $h_m$. An x-axis length 923 of the framing image 909 may be $w_s$. A y-axis length 925 of the framing image 909 may be $h_s$. An x-coordinate 931 of a point corresponding to a touch input within the edit image 903 may be $x_a$. A y-coordinate 933 of the point corresponding to the touch input within the edit image 903 may be $y_a$. An x-coordinate 935 from the shooting information 901 to the edit image 903 may be $x_c$. A y-coordinate 937 from the shooting information 901 to the edit image 903 may be $y_c$. An x-coordinate 939 of a point corresponding to a touch input within the preview image 905 may be $x_p$. A y-

coordinate 941 of the point corresponding to the touch input within the preview image 905 may be $y_p$. An x-coordinate 943 of a point corresponding to a touch input within the map view image 907 may be $x_m$. A y-coordinate 945 of the point corresponding to the touch input within the map view image 907 may be $y_m$. An x-coordinate 947 of a point corresponding to a touch input within the framing image 909 may be $x_n$. A y-coordinate 949 of the point corresponding to the touch input within the framing image 909 may be $y_n$.

According to embodiments, the at least one processor 120 may generate the preview image, the map view image, and the framing image based on the edit image.

According to an embodiment, the at least one processor 120 may generate the edit image 903 in accordance with a designated aspect ratio from the shooting information 901. In order to easily convert the image obtained from the camera into the framing image 909, the preview image 905, or the map view image 907, the edit image 903 may be generated based on the image included in the shooting information. This is because an aspect ratio of the framing image 909, the preview image 905, and the map view image 907 is the same.

According to an embodiment, the preview image 905 may be obtained by reducing or enlarging a portion of the edit image 903. The aspect ratio (e.g., $w_p : h_p$) of the preview image 905 may match the aspect ratio ($w_a : h_a$) of the edit image 903. According to an embodiment, the map view image 907 may be obtained by reducing or enlarging the edit image 903. The aspect ratio (e.g., $w_p : h_p$) of the map view image 907 may match the aspect ratio ($w_a : h_a$) of the edit image 903. According to an embodiment, the framing image 909 may be obtained by reducing or enlarging the edit image 903. The aspect ratio (e.g., $w_p : h_p$) of the framing image 909 may match the aspect ratio ($w_a : h_a$) of the edit image 903.

According to an embodiment, the at least one processor 120 may transform a coordinate of a point on the edit image 903 into a coordinate of a point on the preview image 905. X-axis coordinate transformation may be performed based on Equation 1. Y-axis coordinate transformation may be performed based on Equation 2.

【Equation 1】

$$x_p = \frac{w_p}{w_a}(x_a - x_c)$$

【Equation 2】

$$y_p = \frac{w_p}{w_a}(y_a - y_c)$$

Herein, $x_p$ indicates the x-coordinate 939 of the point corresponding to the touch input within the preview image 905, and $y_p$ indicates the y-coordinate 941 of the point corresponding to the touch input within the preview image 905. $X_a$ indicates the x-coordinate 931 of the point corresponding to the touch input within the edit image 903, and $y_a$ indicates the y-coordinate 933 of the point corresponding to the touch input within the edit image 903. $X_c$ indicates the x-coordinate 935 from the shooting information 901 to the edit image 903, and $y_c$ indicates the y-coordinate 937 from the shooting information 901 to the edit image 903. $W_a$ indicates the x-axis length 911 of the edit image 903, and $w_p$ indicates the x-axis length 915 of the preview image 905.

According to an embodiment, the at least one processor 120 may transform the coordinate of the point on the edit image 903 into a coordinate of a point on the map view image 907. X-axis coordinate transformation may be performed based on Equation 3. Y-axis coordinate transformation may be performed based on Equation 4.

【Equation 3】

$$x_m = \frac{w_m}{w_a}(x_a - x_c)$$

【Equation 4】

$$y_m = \frac{w_m}{w_a}(y_a - y_c)$$

Herein, $x_m$ indicates the x-coordinate 943 of the point corresponding to the touch input within the map view image 907, and $y_m$ indicates the y-coordinate 945 of the point corresponding to the touch input within the map view image 907. $X_a$ indicates the x-coordinate 931 of the point corresponding to the touch input within the edit image 903, and $y_a$ indicates the y-coordinate 933 of the point corresponding to the touch input in the edit image 903. $X_c$ indicates the x-coordinate 935 from the shooting information 901 to the edit image 903, and $y_c$ indicates the y-coordinate 937 from the shooting information 901 to the edit image 903. $W_a$ indicates the x-axis length 923 of the framing image 909, and $w_m$ indicates the x-axis length 919 of the map view image 907.

According to an embodiment, the at least one processor 120 may transform the coordinate of the point on the edit image 903 into a coordinate of a point on the framing image 909. X-axis coordinate transformation may be performed based on Equation 5. Y-axis coordinate transformation may be performed based on Equation 6.

【Equation 5】

$$x_s = \frac{w_s}{w_a}(x_a - x_c)$$

【Equation 6】

$$y_s = \frac{w_s}{w_a}(y_a - y_c)$$

Herein, $x_s$ indicates the x-coordinate 947 of the point corresponding to the touch input within the framing image 909, and $y_s$ indicates the y-coordinate 949 of the point corresponding to the touch input within the framing image 909. $X_a$ indicates the x-coordinate 931 of the point corresponding to the touch input within the edit image 903, and $y_a$ indicates the y-coordinate 933 of the point corresponding to the touch input within the edit image 903. $x_c$ indicates the x-coordinate 935 from the shooting information 901 to the edit image 903, and $y_c$ indicates the y-coordinate 937 from the shooting information 901 to the edit image 903. $w_a$ indicates the x-axis length 923 of the framing image 909, and $w_p$ indicates the x-axis length 915 of the preview image 905.

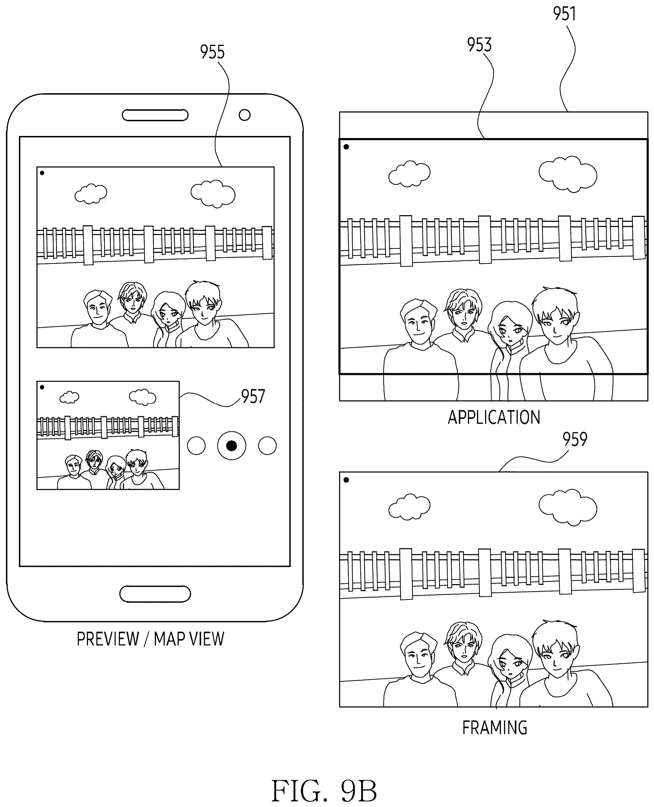

FIG. 9B illustrates an example of a coordinate-transformed object area, according to embodiments. A case where a preview area within a map view image matches the map view image is illustrated.

Referring to FIG. 9B, shooting information 951 may be obtained through a camera. An edit image 953 may be an image obtained in accordance with the designated aspect ratio from the shooting information 951 obtained through the camera (e.g., the camera 310 of FIG. 3). A preview image 955 may be displayed to guide the user to information on the image stored in memory when shooting. A map view image 957 may be displayed to guide the user to a position of the enlarged preview image 955 for an entire image. A framing image 959 may be obtained by reducing or enlarging the edit image 953 while maintaining the designated aspect ratio.

According to an embodiment, the at least one processor 120 may generate the edit image 953 in accordance with the designated aspect ratio from the shooting information 951. For example, the at least one processor 120 may generate the edit image 953 having an aspect ratio of 16:9 based on the image having an aspect ratio of 4:3 included in the shooting information 951. The at least one processor 120 may generate the edit image 953 having an aspect ratio of 16:9 by cropping a portion of the image having an aspect ratio of 4:3 included in the shooting information 951. In order to easily convert the image obtained from the camera into the framing image 959, the preview image 955, or the map view image 957, the edit image 953 may be generated based on the shooting information 951. This is because the aspect ratio of the framing image 959, the preview image 955, and the map view image 957 is the same.

According to an embodiment, since no object is detected within the framing image 959, the framing preview area corresponds to an entire framing image. This is because no object is detected, so there is no need to automatically enlarge the image.

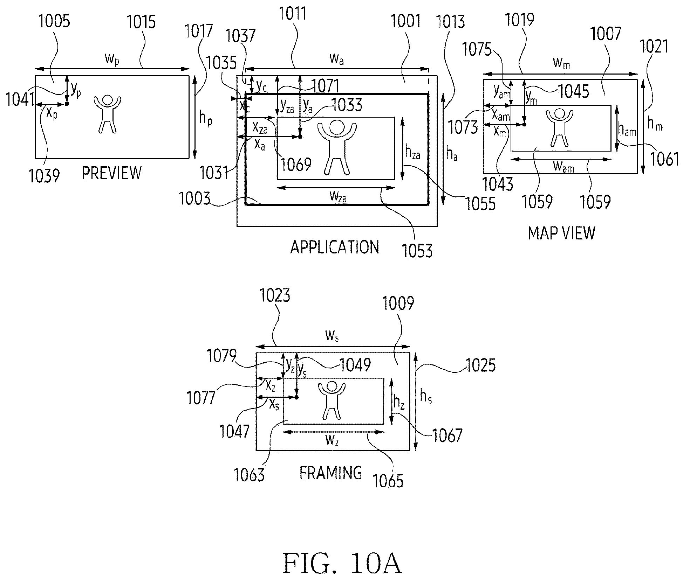

FIG. 10A illustrates an example of coordinate transformation between preview areas, according to embodiments.

Referring to FIG. 10A, at least one processor (e.g., the processor 120 of FIG. 1) may generate an edit image 1003 based on shooting information 1001. The preview image 1005 may be displayed to guide information on an image stored in memory when shooting. The map view image 1007 may be displayed to guide the user to a position of the enlarged preview image 1005 for an entire image.

An x-axis length 1011 of the edit image 1003 may be $w_a$. A y-axis length 1013 of the edit image 1003 may be $h_a$. An x-axis length 1015 of the preview image 1005 may be $w_p$. A y-axis length 1017 of the edit image 1005 may be $h_p$. An x-axis length 1019 of the map view image 1007 may be $w_m$. A y-axis length 1021 of the map view image 1007 may be $hm$. An x-axis length 1023 of the framing image 1009 may be $w_s$. A y-axis length 1025 of the framing image 1009 may be $h_s$. An x-coordinate 1031 of a point corresponding to a touch input within the edit image 1003 may be $x_a$. A y-coordinate 1033 of the point corresponding to the touch input within the edit image 1003 may be $y_a$. An x-coordinate 1035 from the shooting information 1001 to the edit image 1003 may be $x_c$. A y-coordinate 1037 from the shooting information 1001 to the edit image 1003 may be $y_c$. An x-coordinate 1039 of a point corresponding to an touch input within the preview image 1005 may be $x_p$. A y-coordinate 1041 of the point corresponding to the touch input within the preview image 1005 may be $y_p$. An x-coordinate 1043 of a point corresponding to a touch input within the map view image 1007 may be $x_m$. A y-coordinate 1045 of the point corresponding to the touch input within the map view image 1007 may be $y_m$. An x-coordinate 1047 of a point corresponding to a touch input within the framing image 1009 may be $x_s$. A y-coordinate 1049 of the point corresponding to the touch input within the framing image 1009 may be $y_s$.

An x-axis length 1053 of an edit preview area 1051 of the edit image 1003 may be $w_{za}$. A y-axis length 1055 of the edit image 1051 may be $h_{za}$.

An x-axis length 1059 of a preview area 1057 of the map view image 1007 may be $w_{am}$. A y-axis length 1061 of the preview area 1057 of the map view image 1007 may be $h_{am}$. An x-axis length 1065 of a preview area 1063 of the framing image 1009 may be $w_z$. A y-axis length 1067 of the preview area 1063 of the framing image 1009 may be $h_z$.

An x-coordinate 1069 from the shooting information 1001 to the edit preview area 1051 may be $x_{za}$. A y-coordinate 1071 from the shooting information 1001 to the edit preview area 1051 may be $y_{za}$. An x-coordinate 1073 from the map view image 1007 to the preview area 1057 may be $x_{am}$. A y-coordinate 1075 from the map view image 1007 to the preview area 1057 may be $y_{am}$. An x-coordinate 1077 from the framing image 1009 to the framing preview area 1063 may be $x_w$. A y-coordinate 1079 from the framing image 1009 to the preview area 1063 may be $y_z$.

According to an embodiment, the at least one processor 120 may identify the edit preview area 1051 based on the framing preview area 1063. The at least one processor 120 may display the preview area 1057 within the map view image 1007 based on the edit preview area 1051.

The at least one processor 120 may generate the preview image 1005 based on the edit preview area 1051 within the edit image 1003.

The at least one processor 120 may generate the preview area 1057 within the map view image 1007 based on the edit preview area 1051 within the edit image 1003.

According to an embodiment, the preview image 1005 may be obtained by reducing or enlarging a portion of the edit image 1003. The portion of the edit image 1003 may be the edit preview area 1051. An aspect ratio (e.g., $w_p : h_p$) of the preview image 1005 may match an aspect ratio ($w_a : h_a$) of the edit image 1003. The aspect ratio (e.g., $w_p : h_p$) of the preview image 1005 may match an aspect ratio ($w_{za} : h_{za}$) of the edit preview area 1051. According to an embodiment, the map view image 1007 may be obtained by reducing or enlarging the edit image 1003. An aspect ratio (e.g., $w_p : h_p$) of the map view image 1007 may match the aspect ratio ($w_a : h_a$) of the edit image 1003. The aspect ratio (e.g., $w_p : h_p$) of the map view image 1007 may correspond to the aspect ratio ($w_{za} : h_{za}$) of the edit preview area 1051. According to an embodiment, the framing image 1009 may be obtained by reducing or enlarging the edit image 1003. An aspect ratio (e.g., $w_p : h_p$) of the framing image 1009 may match the aspect ratio ($w_a : h_a$) of the edit image 1003. The aspect ratio (e.g., $w_p : h_p$) of the framing image 1009 may match the aspect ratio ($w_{za} : h_{za}$) of the edit preview area 1051.

According to an embodiment, the at least one processor 120 may transform a coordinate of a point on the edit image 1003 into a coordinate of a point on the preview image 1005. X-axis coordinate transformation may be performed based on Equation 1. Y-axis coordinate transformation may be performed based on Equation 2.

【Equation 1】

$$x_p = \frac{w_p}{w_a}(x_a - x_c)$$

【Equation 2】

$$y_p = \frac{w_p}{w_a}(y_a - y_c)$$

According to an embodiment, the at least one processor 120 may transform the coordinate of the point on the edit image 1003 into a coordinate of a point on the map view image 1007. X-axis coordinate transformation may be performed based on Equation 3. Y-axis coordinate transformation may be performed based on Equation 4.

【Equation 3】

$$x_p = \frac{w_p}{w_a}(x_a - x_c)$$

【Equation 4】

$$y_p = \frac{w_p}{w_a}(y_a - y_c)$$

According to an embodiment, the at least one processor 120 may transform the coordinate of the point on the edit image 1003 into a coordinate of a point on the framing image 909. X-axis coordinate transformation may be performed based on Equation 5. Y-axis coordinate transformation may be performed based on Equation 6.

【Equation 5】

$$x_s = \frac{w_s}{w_a}(x_a - x_c)$$

【Equation 6】

$$y_s = \frac{w_s}{w_a}(y_a - y_c)$$

According to an embodiment, the at least one processor 120 may transform a coordinate of the framing preview area 1063 of the framing image 1009 into a coordinate of the edit preview area 1051 of the edit image 1003. X-axis coordinate transformation may be performed based on Equation 7. Y-axis transformation may be performed based on Equation 8.

【Equation 7】

$$x_{za} = x_c + \left(x_z * \frac{w_a}{w_s}\right)$$

【Equation 8】

$$y_{za} = y_c + \left(y_z * \frac{w_a}{w_s}\right)$$

Herein, $x_{za}$ indicates the x-coordinate 1069 from the shooting information 1001 to the edit preview area 1051, and $y_{za}$ indicates the y-coordinate 1071 from the shooting information 1001 to the edit preview area 1051. $x_z$ indicates the x-coordinate 1077 from the framing image 1009 to the framing preview area 1063, and $y_z$ indicates the y-coordinate 1079 from the framing image 1009 to the preview area 1063. $x_c$ indicates the x-coordinate 935 from the shooting information 901 to the edit image 903, and $y_c$ indicates the y-coordinate 937 from the shooting information 901 to the edit image 903. $w_a$ indicates the x-axis length 923 of the framing image 909, and $w_s$ indicates the x-axis length 1023 of the framing image 1009.

According to an embodiment, the at least one processor 120 may transform the coordinate of the edit preview area 1051 of the edit image 1003 into a coordinate of the preview area 1027 of the map view image 1007. X-axis coordinate transformation may be performed based on Equation 9. Y-axis transformation may be performed based on Equation 10.

【Equation 9】

$$x_{am} = (x_{za} - x_c)\frac{w_m}{w_a}$$

【Equation 10】

$$y_{am} = (y_{za} - y_c)\frac{w_m}{w_a}$$

Herein, $x_{am}$ indicates the x-coordinate 1073 from the map view image 1007 to the preview area 1057, and $y_{am}$ indicates the y-coordinate 1075 from the map view image 1007 to the preview area 1057. $x_{za}$ indicates the x-coordinate 1069 from the shooting information 1001 to the edit preview area 1051, and $y_{za}$ indicates the y-coordinate 1071 from the shooting information 1001 to the edit preview area 1051. $x_c$ indicates the x-coordinate 935 from the shooting information 901 to the edit image 903, and $y_c$ indicates the y-coordinate 937 from the shooting information 901 to the edit image 903. $w_a$ indicates the x-axis length 923 of the framing image 909, and $w_m$ indicates the x-axis length 1019 of the map view image 1007.

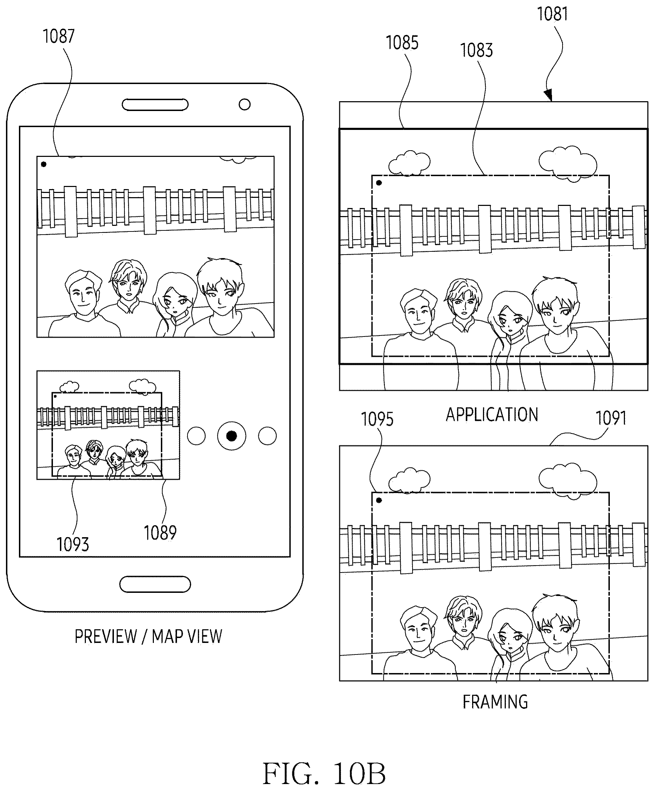

FIG. 10B illustrates an example of a coordinate-transformed preview area, according to embodiments.

Referring to FIG. 10B, shooting information 1081 may be obtained through a camera. An edit image 1085 may be an image obtained in accordance with a designated aspect ratio from the shooting information 1081 obtained through the camera (e.g., the camera 310 of FIG. 3). A preview image 1087 may be displayed to guide a user to information on the image stored in memory when shooting. A map view image 1089 may be displayed to guide the user to a position of the enlarged preview image 1087 for an entire image. A framing image 1091 may be obtained by reducing or enlarging the edit image 1085 while maintaining the designated aspect ratio. A framing preview area 1095 may be an area within the framing image 1091 including a designated object. An edit preview area 1083 may correspond to the framing preview area 1095. The edit preview area 1083 may be an area within the edit image 1085. A preview area 1093 may be an area within the map view image 1089.

According to an embodiment, the at least one processor 120 may generate the edit image 1085 in accordance with the designated aspect ratio from the shooting information 1081. For example, the at least one processor 120 may generate the edit image 1085 of an aspect ratio of 16:9 based on the image of an aspect ratio of 4:3 included in the shooting information 1081.

According to an embodiment, when an object is detected within the framing image 1091 through the framing engine, the at least one processor 120 may identify the framing preview area. The at least one processor 120 may enlarge the objects to reflect an interest of the user.

According to an embodiment, the at least one processor 120 may transform coordinate information of the framing preview area 1095 to coordinate information of the edit preview area 1083. According to an embodiment, the at least one processor 120 may display the preview image 1087 corresponding to an image portion included in the edit preview area 1083 through a display. According to an embodiment, the at least one processor 120 may transform the coordinate information of the edit preview area 1083 to coordinate information of the preview area 1093 within the map view image 1089.

According to embodiments, an object display method such as a shape or color for object display may be various. According to an embodiment, the object may be displayed in a rectangular shape composed of a dark solid line. According to another embodiment, the object may be displayed in a rectangular shape composed of a dotted line. According to an embodiment, the object may be displayed in a circular shape composed of a dark solid line. According to an embodiment, the object may be displayed in a circular shape composed of a dotted line. However, embodiments of the present disclosure are not limited thereto.

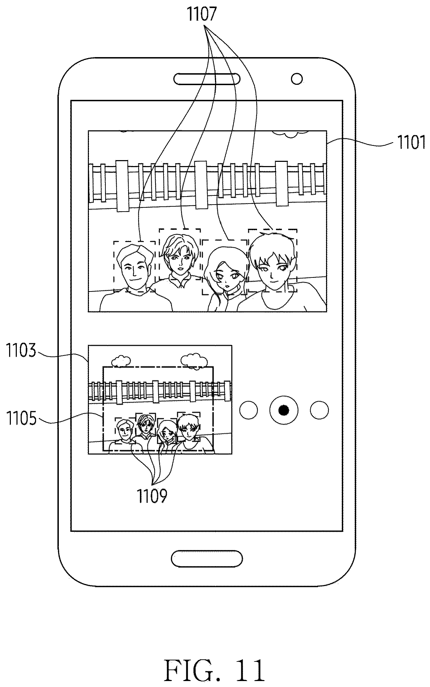

FIG. 11 illustrates an example of a preview image determined based on coordinate information of an object area, according to embodiments.

Referring to FIG. 11, a preview image 1101 may be displayed to guide a user to information on an image stored in memory when shooting. A map view image 1103 may be displayed to guide the user to a position of the enlarged preview image 1101 for an entire image. A first object area 1107 may be a portion of the image corresponding to a designated object within the preview image 1101. A second object area 1109 may be a portion of the image corresponding to the designated object within the map view image 1103. A preview area 1105 may be an area corresponding to the preview image.

According to an embodiment, the at least one processor 120 may perform object detection and tracking. According to an embodiment, the at least one processor 120 may detect the designated object within the framing image through a framing engine. For example, the at least one processor 120 may detect an object corresponding to a human face within the framing image through the framing engine. The framing object area may be a portion of the framing image including the object. The at least one processor 120 may transform coordinate information of the framing object area to coordinate information of the first object area 1107 within the preview image 1101. The at least one processor 120 may transform coordinate information of the second object area 1109 within the map view image 1103.

The at least one processor 120 may identify a preview area. The preview area may be the preview area 1105 that is a portion in which the preview image is displayed on the map view image 1103. According to an embodiment, the at least one processor 120 may identify a framing preview area based on the framing object area through the framing engine. The framing preview area may be a rectangular portion having a minimum size including the framing object area on the framing image. The at least one processor 120 may identify an edit preview area based on the framing preview area. The at least one processor may identify the preview area 1105 to be displayed on the map view image 1103 based on the edit preview area. The at least one processor may transform coordinate information of the framing preview area included in the framing image to coordinate information of the edit preview area included in the edit image. The at least one processor may transform coordinate information of the preview area included in the edit image to coordinate information of the preview area included in the map view image.

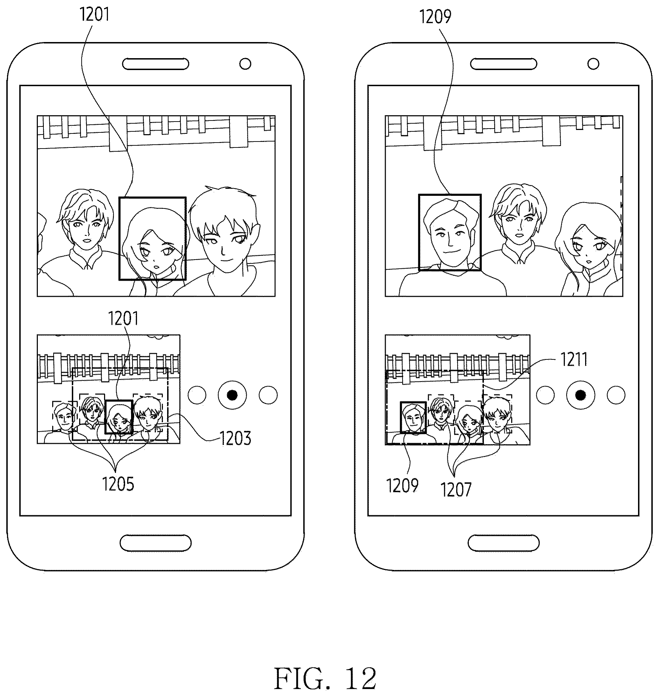

FIG. 12 illustrates an example of identification of an object area based on receiving a touch input, according to embodiments.

Referring to FIG. 12, a designated object 1201 may be designated to be included in a preview image based on a user input. An undesignated object 1205 may be designated so as not to affect the preview image based on the user input. A preview area 1203 may be identified based on an object area of the designated object 1201. A designated object 1209 may be designated to be included in the preview image based on the user input. The designated object may have been changed from the designated object 1201 to the designated object 1209 based on the user input. An undesignated object 1207 may be designated so as not to affect the preview image based on the user input. The preview area 1209 may be identified based on the designated object 1209.

According to an embodiment, the at least one processor 120 may identify whether a touch input for selecting another object is received.

According to an embodiment, the at least one processor 120 may designate an object based on the touch input. For example, the at least one processor 120 may designate the object (e.g., the designated object 1201) included in the preview image. The preview image may include the designated object 1201, and may enlarge and indicate an image portion including the designated object 1201. According to an embodiment, the user may further designate an object to be included in the preview image through the touch input. According to another embodiment, the at least one processor 120 may designate an object that does not affect the preview image. For example, the undesignated object 1205 may be designated as the object that does not affect the preview image.

According to an embodiment, the touch input may be received on a display displaying a map view image. For example, on the display, the touch input may be received on a second object area (e.g., a designated object 1201 area and an undesignated object 1205 area) within the map view image. The at least one processor 120 may include the second object area (e.g., the designated object 1201 area in which the touch input is received) as a target object considered when identifying the preview area. For another example, the at least one processor 120 may exclude the second object area (e.g., the undesignated object 1205 area) in which the touch input is received from the target object considered when identifying the preview area. When selecting an object on the map view image, an object that is not necessarily included in the preview image may also be designated without a zoom-out operation. For example, in case that the preview image is generated to include the designated object 1201, it may be difficult to perform the touch input without the zoom-out operation in the preview image with respect to a portion of the image corresponding to the undesignated object. However, the touch input may be possible in the map view image.

According to another embodiment, the touch input may be received on the display displaying the preview image. For example, on the display, the touch input may be received on a first object area (e.g., the designated object 1201 area) within the preview image. The at least one processor 120 may include the first object area in which the touch input is received as the target object considered when identifying the preview area. For another example, the at least one processor 120 may exclude the first object area in which the touch input is received from the target object considered when identifying the preview area.

According to an embodiment, when a touch input for selecting another object or a touch input for excluding an object is received, the at least one processor 120 may change an object area based on the touch input.

According to an embodiment, the at least one processor 120 may receive the touch input for selecting the other object. The at least one processor 120 may identify the changed object area (e.g., an area on an edit image corresponding to the designated object 1209) based on receiving the touch input. The at least one processor 120 may identify a new preview area (e.g., a preview area 1211) based on another object area (e.g., the area on the edit image corresponding to the designated object 1209). The at least one processor 120 may display a new preview image through the display based on the new preview area (e.g., the preview area 1211). The at least one processor 120 may display a third object area (e.g., a designated object 1209 area) on the new preview image through the display while displaying the new preview image. A position of the third object area (e.g., the designated object 1209) on the preview image may be determined based on a coordinate area of the new preview image and the other object area. The at least one processor 120 may display the new preview area for the new preview image and a fourth object area (e.g., the designated object 1209 area) on the new map view image, through the display while displaying the new map view image. A position of the fourth object area (e.g., the designated object 1209 area) on the map view image may be determined based on coordinate information of the map view image and the other object area.

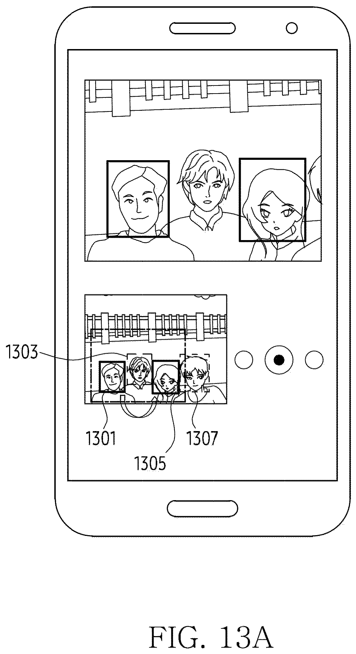

FIG. 13A illustrates an example of identification of a plurality of object areas based on receiving a touch input, according to embodiments.

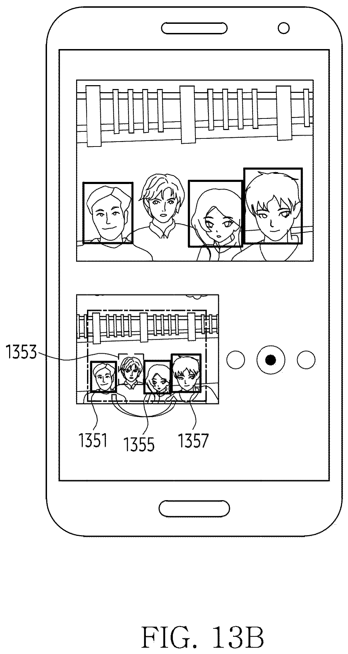

FIG. 13B illustrates an example of identification of a plurality of object areas based on receiving a touch input, according to embodiments.

According to an embodiment, the at least one processor 120 may set or add an object necessarily included in a preview image based on a user input.

Referring to FIG. 13A, the at least one processor 120 may identify an object 1301, an object 1303, an object 1305, and an object 1307 as a human face. An object may be designated as the object necessarily included in the preview image based on the user input. The user input may be a drag input. The user input may be a touch input.

According to an embodiment, the object 1301 may be designated as an object necessarily included in the preview image based on the user input. The object 1303 may be designated as an object that is not necessarily included in the preview image based on the user input. The object 1305 may be designated as an object necessarily included in the preview image based on the user input. The object 1307 may be designated as an object that is not necessarily included in the preview image based on the user input. A user may set the objects by drag-inputting from an object 1301 area to an object 1305 area. Since the object 1307 is set not to be necessarily included in the preview image, a portion of the object 1307 may not be displayed on the preview image.

According to FIG. 13B, the at least one processor 120 may identify an object 1351, an object 1353, an object 1355, and an object 1357 as a human face. An object may be designated as an object necessarily included in the preview image based on the user input. The user input may be a drag input. The user input may be a touch input.

According to an embodiment, the object 1351 may be designated as an object necessarily included in the preview image based on the user input. The object 1353 may be designated as an object that is not necessarily included in the preview image based on the user input. The object 1355 may be designated as an object necessarily included in the preview image based on the user input. The object 1357 may be designated as an object necessarily included in the preview image based on the user input. The user may touch a designated object (e.g., the object 1351 or the object 1355) to be necessarily included in the preview image, and then drag it into the object 1357. The object 1357 may be changed from an object that is not necessarily included in the preview image to an object that is necessarily included in the preview image, by the drag input. Since the object 1357 is set to be necessarily included in the preview image, all of the objects 1357 may be displayed on the preview image.

Although not illustrated in FIG. 13B, the at least one processor 120 may set an object to correspond to the object that is not necessarily included in the preview image, based on a touch input with respect to an object area on the preview image or a map view image.

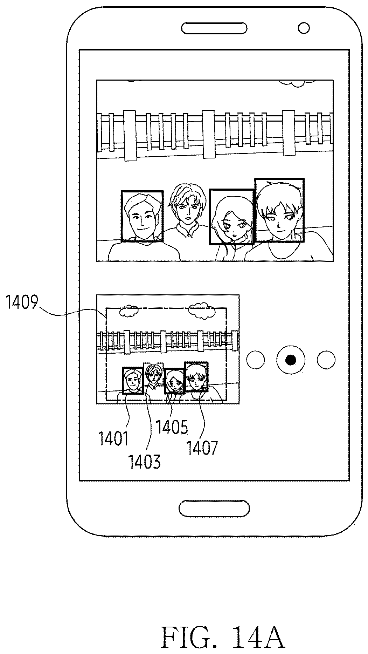

FIG. 14A illustrates an example of identification of a preview area based on receiving a touch input for a zoom-in operation, according to embodiments.

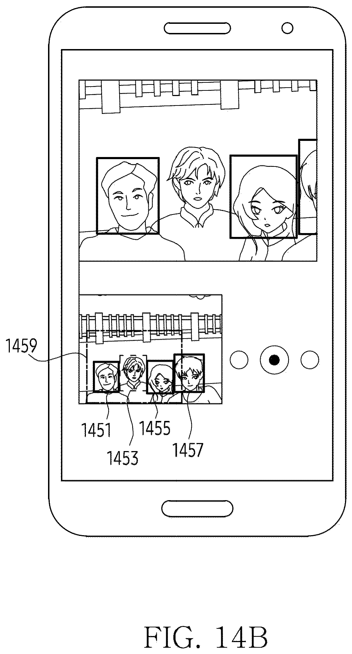

FIG. 14B illustrates an example of movement of a preview area based on receiving a touch input, according to embodiments.

Referring to FIG. 14A, the at least one processor 120 may identify an object 1401, an object 1403, an object 1405, and an object 1407 as a human face within a preview area 1409. A framing preview area may be identified based on an area including the object (e.g., the object 1401, the object 1403, the object 1405, and the object 1407). An edit preview area may be generated based on the framing preview area. A preview image may be generated based on the edit preview area.

According to an embodiment, a degree of zoom-in of the preview image may be adjusted by a user input. For example, the user input may be a pinch zoom-out input. As another example, the user input may be a pinch zoom-in input. For another example, the user input may be a designated gesture. The at least one processor 120 may set the identified object to be included in the preview image based on identifying a v-gesture. The designated object 1401, the designated object 1405, and the designated object 1407 may be included in the preview area. The designated object 1401, the designated object 1405, and the designated object 1407 may be included in the preview image. However, an area of the preview image may be changed by the user input. For example, the preview image may indicate a wider area by the pinch zoom-out input of the user. As another example, the preview image may indicate a narrower area by the pinch zoom-in input of the user. For example, the designated object area 1407 may not be included in accordance with a zoom-in operation of the camera.

Referring to FIG. 14B, the at least one processor 120 may identify an object 1451, an object 1453, an object 1455, and an object 1457 as a human face within a preview area 1459. A framing preview area may be identified based on an area including the object (e.g., the object 1451, the object 1453, the object 1455, and the object 1457). An edit preview area may be generated based on the framing preview area. A preview image may be generated based on the edit preview area.

According to an embodiment, the area of the preview image may be adjusted by a user input. For example, the user input may be a plurality of drag inputs. The plurality of drag inputs may be drag inputs by two fingers of the user. The designated object 1451, the designated object 1455, and the designated object 1457 may be included in the preview area. The designated object 1451, the designated object 1455, and the designated object 1457 may be included in the preview image. However, the area of the preview image may be changed by the user input. For example, the area of the preview image may be changed by the plurality of drag inputs of the user. For example, the designated object area 1457 may not be included in accordance with a change in the area of the preview image.

As described above, an electronic device 101 according to an embodiment may comprise a camera, a display 160, and at least one processor 120. The at least one processor 120 may be configured to obtain shooting information 901 or 1001 via the camera 180 or 310. The at least one processor 120 may be configured to identify an object area including a designated object based on the shooting information 901 or 1001 through a framing engine. The at least one processor 120 may be configured to display, via the display 160, a preview image 401, 801, 805, 905, 955, 1005, 1087, or 1101 corresponding to the shooting information 901 or 1001 based on the identified object area. The at least one processor 120 may be configured to display, via the display 160, a map view image 403, 803, 807, 907, 957, 1007, 1089, or 1103 corresponding to the shooting information 901 or 1001. The at least one processor 120 may be configured to display, via the display 160, a first object area on the preview image 401, 801, 805, 905, 955, 1005, 1087, or 1101 while displaying the preview image 401, 801, 805, 905, 955, 1005, 1087, or 1101. The at least one processor 120 may be configured to display, via the display 160, a preview area for the preview image 401, 801, 805, 905, 955, 1005, 1087, or 1101 and a second object area on the map view image 403, 803, 807, 907, 957, 1007, 1089, or 1103 while displaying the map view image 403, 803, 807, 907, 957, 1007, 1089, or 1103. A position of the first object area on the preview image 401, 801, 805, 905, 955, 1005, 1087, or 1101 may be determined based on the preview image 401, 801, 805, 905, 955, 1005, 1087, or 1101 and coordinate information of the object area. A position of the second object area on the map view image 403, 803, 807, 907, 957, 1007, 1089, or 1103 may be determined based on the map view image 403, 803, 807, 907, 957, 1007, 1089, or 1103 and the coordinate information of the object area.

To identify the object area through the framing engine, the at least one processor 120 according to an embodiment may be configured to obtain an edit image 903 or 1003 from the shooting information 901 or 1001 in accordance with a designated aspect ratio. To identify the object area through the framing engine, the at least one processor 120 may be configured to obtain a framing image 909, 959, 1009, or 1091 for the framing engine based on the edit image 903 or 1003. To identify the object area through the framing engine, the at least one processor 120 may be configured to identify the object area based on a framing object area in which the designated object is located within the framing image 909, 959, 1009, or 1091.

The framing image 909, 959, 1009, or 1091 according to an embodiment may be obtained by reducing or enlarging the edit image 903 or 1003 in accordance with the designated aspect ratio.

The object area according to an embodiment may be obtained based on coordinate information of the framing object area in which the designated object is located within the framing image 909, 959, 1009, or 1091 and the edit image 903 or 1003.

The preview image 401, 801, 805, 905, 955, 1005, 1087, or 1101 according to an embodiment may be obtained by reducing or enlarging a portion of the edit image 903 or 1003 while maintaining the designated aspect ratio. The preview image 401, 801, 805, 905, 955, 1005, 1087, or 1101 may include the object area. The position of the first object area may be determined based on the edit image 903 or 1003, a magnification of the preview image 401, 801, 805, 905, 955, 1005, 1087, or 1101, and the coordinate information of the object area.

The map view image 403, 803, 807, 907, 957, 1007, 1089, or 1103 according to an embodiment may be obtained by reducing or enlarging the edit image 903 or 1003 while maintaining the designated aspect ratio. The position of the second object area may be determined based on the edit image 903 or 1003, a magnification of the map view image 403, 803, 807, 907, 957, 1007, 1089, or 1103, and the coordinate information of the object area.

The shooting information 901 or 1001 according to an embodiment may be obtained at an application layer. The object area may be obtained at the application layer.

The preview image 401, 801, 805, 905, 955, 1005, 1087, or 1101 according to an embodiment may be obtained in accordance with a zoom-in operation of the camera 180 or 310 executed based on identifying the object area.

The at least one processor 120 according to an embodiment may be configured to receive a touch input for selecting another object within the preview image 401, 801, 805, 905, 1005, 1087, or 1101 or the map view image 403, 803, 807, 907, 957, 1007, 1089, or 1103. The at least one processor 120 may be configured to identify another object area corresponding to the another object based on receiving the touch input. The at least one processor 120 may be configured to display, on the display 160, a new preview image 401, 801, 805, 905, 955, 1005, 1087, or 1101 based on the another object area. The at least one processor 120 may be configured to display, via the display 160, a third object area on the new preview image 401, 801, 805, 905, 955, 1005, 1087, or 1101 while displaying the new preview image 401, 801, 805, 905, 955, 1005, 1087, or 1101. The at least one processor 120 may be configured to display, via the display 160, a new preview area for the new preview image 401, 801, 805, 905, 955, 1005, 1087, or 1101 and a fourth object area on a new map view image 403, 803, 807, 907, 957, 1007, 1089, or 1103 while displaying the new map view image 403, 803, 807, 907, 957, 1007, 1089, or 1103. A position of the third object area on the preview image 401, 801, 805, 905, 955, 1005, 1087, or 1101 may be determined based on the new preview image 401, 801, 805, 905, 955, 1005, 1087, or 1101 and coordinate information of the another object area. A position of the fourth object area on the map view image 403, 803, 807, 907, 957, 1007, 1089, or 1103 may be determined based on the map view image 403, 803, 807, 907, 957, 1007, 1089, or 1103 and the coordinate information of the another object area.

The at least one processor 120 according to an embodiment may include a neural processing unit (NPU) and a central processing unit (CPU). The NPU may be configured to include the framing engine.

As described above, a method performed by an electronic device 101 according to an embodiment may comprise obtaining shooting information 901 or 1001 through a camera 180 or 310. The method may comprise identifying an object area including a designated object based on the shooting information 901 or 1001 through a framing engine. The method may comprise displaying, via a display 160, a preview image 401, 801, 805, 905, 955, 1005, 1087, or 1101 corresponding to the shooting information 901 or 1001 based on the identified object area. The method may comprise displaying, via the display 160, a map view image 403, 803, 807, 907, 957, 1007, 1089, or 1103 corresponding to the shooting information 901 or 1001. The method may comprise displaying, via the display 160, a first object area on the preview image 401, 801, 805, 905, 955, 1005, 1087, or 1101 while displaying the preview image 401, 801, 805, 905, 955, 1005, 1087, or 1101. The method may comprise displaying, via the display 160, a preview area for the preview image 401, 801, 805, 905, 955, 1005, 1087, or 1101 and a second object area on the map view image 403, 803, 807, 907, 957, 1007, 1089, or 1103 while displaying the map view image 403, 803, 807, 907, 957, 1007, 1089, or 1103. A position of the first object area on the preview image 401, 801, 805, 905, 955, 1005, 1087, or 1101 may be determined based on the preview image 401, 801, 805, 905, 955, 1005, 1087, or 1101 and coordinate information of the object area. A position of the second object area on the map view image 403, 803, 807, 907, 957, 1007, 1089, or 1103 may be determined based on the map view image 403, 803, 807, 907, 957, 1007, 1089, or 1103 and the coordinate information of the object area.

The identifying the object area through the framing engine according to an embodiment may comprise obtaining an edit image 903 or 1003 from the shooting information 901 or 1001 in accordance with a designated aspect ratio. The identifying the object area through the framing engine may comprise obtaining a framing image 909, 959, 1009, or 1091 for the framing engine based on the edit image 903 or 1003. The identifying the object area through the framing engine may comprise identifying the object area based on a framing object area in which the designated object is located within the framing image 909, 959, 1009, or 1091.

The framing image 909, 959, 1009, or 1091 according to an embodiment may be obtained by reducing or enlarging the edit image 903 or 1003 in accordance with the designated aspect ratio.

The object area according to an embodiment may be obtained based on coordinate information of the framing object area in which the designated object is located within the framing image 909, 959, 1009, or 1091 and the edit image 903 or 1003.

The preview image 401, 801, 805, 905, 955, 1005, 1087, or 1101 according to an embodiment may be obtained by reducing or enlarging a portion of the edit image 903 or 1003 while maintaining the designated aspect ratio. The preview image 401, 801, 805, 905, 955, 1005, 1087, or 1101 may include the object area. The position of the first object area may be determined based on the edit image 903 or 1003, a magnification of the preview image 401, 801, 805, 905, 955, 1005, 1087, or 1101, and the coordinate information of the object area.

The map view image 403, 803, 807, 907, 957, 1007, 1089, or 1103 according to an embodiment may be obtained by reducing or enlarging the edit image 903 or 1003 while maintaining the designated aspect ratio. The position of the second object area may be determined based on the edit image 903 or 1003, a magnification of the map view image 403, 803, 807, 907, 957, 1007, 1089, or 1103, and the coordinate information of the object area.

The shooting information 901 or 1001 according to an embodiment may be obtained at an application layer. The object area may be obtained at the application layer.

The preview image 401, 801, 805, 905, 955, 1005, 1087, or 1101 according to an embodiment may be obtained in accordance with a zoom-in operation of the camera 180 or 310 executed based on identifying the object area.

The method according to an embodiment may comprise receiving a touch input for selecting another object within the map view image 403, 803, 807, 907, 957, 1007, 1089, or 1103. The method may comprise identifying another object area corresponding to the another object based on receiving the touch input. The method may comprise displaying, on the display 160, a new preview image 401, 801, 805, 905, 955, 1005, 1087, or 1101 based on the another object area. The method may comprise displaying, via the display 160, a third object area on the new preview image 401, 801, 805, 905, 955, 1005, 1087, or 1101 while displaying the new preview image 401, 801, 805, 905, 955, 1005, 1087, or 1101. The method may comprise displaying, via the display 160, a new preview area for the new preview image 401, 801, 805, 905, 955, 1005, 1087, or 1101 and a fourth object area on a new map view image 403, 803, 807, 907, 957, 1007, 1089, or 1103 while displaying the new map view image 403, 803, 807, 907, 957, 1007, 1089, or 1103. A position of the third object area on the preview image 401, 801, 805, 905, 955, 1005, 1087, or 1101 may be determined based on the new preview image 401, 801, 805, 905, 955, 1005, 1087, or 1101 and coordinate information of the another object area. A position of the fourth object area on the map view image 403, 803, 807, 907, 957, 1007, 1089, or 1103 may be determined based on the map view image 403, 803, 807, 907, 957, 1007, 1089, or 1103 and the coordinate information of the another object area.

The at least one processor 120 according to an embodiment may include a neural processing unit (NPU) and a central processing unit (CPU). The NPU may be configured to include the framing engine.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. An electronic device (101) comprising:

   a camera (180; 310);
   a display (160); and
   at least one processor (120),
   wherein the at least one processor (120) is configured to:

   obtain shooting information (901; 1001) via the camera (180; 310);
   identify an object area including a designated object based on the shooting information (901; 1001) through a framing engine;
   display, via the display (160), a preview image (401; 801; 805; 905; 955; 1005; 1087; 1101) corresponding to the shooting information (901; 1001) based on the identified object area;
   display, via the display (160), a map view image (403; 803; 807; 907; 957; 1007; 1089; 1103) corresponding to the shooting information (901; 1001);
   display, via the display (160), a first object area on the preview image (401; 801; 805; 905; 955; 1005; 1087; 1101) while displaying the preview image (401; 801; 805; 905; 955; 1005; 1087; 1101); and
   display, via the display (160), a preview area for the preview image (401; 801; 805; 905; 955; 1005; 1087; 1101) and a second object area on the map view image (403; 803; 807; 907; 957; 1007; 1089; 1103) while displaying the map view image (403; 803; 807; 907; 957; 1007; 1089; 1103),
   wherein a position of the first object area on the preview image (401; 801; 805; 905; 955; 1005; 1087; 1101) is determined based on the preview image (401; 801; 805; 905; 955; 1005; 1087; 1101) and coordinate information of the object area, and
   wherein a position of the second object area on the map view image (403; 803; 807; 907; 957; 1007; 1089; 1103) is determined based on the map view image (403; 803; 807; 907; 957; 1007; 1089; 1103) and the coordinate information of the object area.

2. The electronic device (101) of claim 1, wherein, to identify the object area through the framing engine, the at least one processor (120) is configured to:

obtain an edit image (903; 1003) from the shooting information (901; 1001) in accordance with a designated aspect ratio;
obtain a framing image (909; 959; 1009; 1091) for the framing engine based on the edit image (903; 1003); and
identify the object area based on a framing object area in which the designated object is located within the framing image (909; 959; 1009; 1091).

3. The electronic device (101) of claims 1 to 2, wherein the framing image (909; 959; 1009; 1091) is obtained by reducing or enlarging the edit image (903; 1003) in accordance with the designated aspect ratio.

4. The electronic device (101) of claims 1 to 3, wherein the object area is obtained based on coordinate information of the framing object area in which the designated object is located within the framing image (909; 959; 1009; 1091) and the edit image (903; 1003).

5. The electronic device (101) of claims 1 to 4,

wherein the preview image (401; 801; 805; 905; 955; 1005; 1087; 1101) is obtained by reducing or enlarging a portion of the edit image (903; 1003) while maintaining the designated aspect ratio,
wherein the preview image (401; 801; 805; 905; 955; 1005; 1087; 1101) includes the object area, and
wherein the position of the first object area is determined based on the edit image (903; 1003), a magnification of the preview image (401; 801; 805; 905; 955; 1005; 1087; 1101), and the coordinate information of the object area.

6. The electronic device (101) of claims 1 to 5,

wherein the map view image (403; 803; 807; 907; 957; 1007; 1089; 1103) is obtained by reducing or enlarging the edit image (903; 1003) while maintaining the designated aspect ratio, and
wherein the position of the second object area is determined based on the edit image (903; 1003), a magnification of the map view image (403; 803; 807; 907; 957; 1007; 1089; 1103), and the coordinate information of the object area.

7. The electronic device (101) of claims 1 to 6,

wherein the shooting information (901; 1001) is obtained at an application layer, and
wherein the object area is obtained at the application layer.

8. The electronic device (101) of claims 1 to 7, wherein the preview image (401; 801; 805; 905; 955; 1005; 1087; 1101) is obtained in accordance with a zoom-in operation of the camera (180; 310) executed based on identifying the object area.

9. The electronic device (101) of claims 1 to 8, wherein the at least one processor (120) is configured to:

receive a touch input for selecting another object within the preview image (401; 801; 805; 905; 955; 1005; 1087; 1101) or the map view image (403; 803; 807; 907; 957; 1007; 1089; 1103);
identify another object area corresponding to the another object based on receiving the touch input;
display, on the display (160), a new preview image (401; 801; 805; 905; 955; 1005; 1087; 1101) based on the another object area;
display, via the display (160), a third object area on the new preview image (401; 801; 805; 905; 955; 1005; 1087; 1101) while displaying the new preview image (401; 801; 805; 905; 955; 1005; 1087; 1101); and
display, via the display (160), a new preview area for the new preview image (401; 801; 805; 905; 955; 1005; 1087; 1101) and a fourth object area on a new map view image (403; 803; 807; 907; 957; 1007; 1089; 1103) while displaying the new map view image (403; 803; 807; 907; 957; 1007; 1089; 1103),
wherein a position of the third object area on the preview image (401; 801; 805; 905; 955; 1005; 1087; 1101) is determined based on the new preview image (401; 801; 805; 905; 955; 1005; 1087; 1101) and coordinate area of the another object area, and
wherein a position of the fourth object area on the map view image (403; 803; 807; 907; 957; 1007; 1089; 1103) is determined based on the map view image (403; 803; 807; 907; 957; 1007; 1089; 1103) and the coordinate information of the another object area.

10. The electronic device (101) of claims 1 to 9,

wherein the at least one processor (120) includes a neural processing unit (NPU) and a central processing unit (CPU), and
wherein the NPU is configured to include the framing engine.

**11.** A method performed by an electronic device (101), the method comprising:

obtaining shooting information (901; 1001) through a camera (180; 310); identifying an object area including a designated object based on the shooting information (901; 1001) through a framing engine; displaying, via a display (160), a preview image (401; 801; 805; 905; 955; 1005; 1087; 1101) corresponding to the shooting information (901; 1001) based on the identified object area; displaying, via the display (160), a map view image (403; 803; 807; 907; 957; 1007; 1089; 1103) corresponding to the shooting information (901; 1001); displaying, via the display (160), a first object area on the preview image (401; 801; 805; 905; 955; 1005; 1087; 1101) while displaying the preview image (401; 801; 805; 905; 955; 1005; 1087; 1101); and displaying, via the display (160), a preview area for the preview image (401; 801; 805; 905; 955; 1005; 1087; 1101) and a second object area on the map view image (403; 803; 807; 907; 957; 1007; 1089; 1103) while displaying the map view image (403; 803; 807; 907; 957; 1007; 1089; 1103), wherein a position of the first object area on the preview image (401; 801; 805; 905; 955; 1005; 1087; 1101) is determined based on the preview image (401; 801; 805; 905; 955; 1005; 1087; 1101) and coordinate information of the object area, and wherein a position of the second object area on the map view image (403; 803; 807; 907; 957; 1007; 1089; 1103) is determined based on the map view image (403; 803; 807; 907; 957; 1007; 1089; 1103) and the coordinate information of the object area.

**12.** The method of claim 11, wherein the identifying the object area through the framing engine comprises:

obtaining an edit image (903; 1003) from the shooting information (901; 1001) in accordance with a designated aspect ratio; obtaining a framing image (909; 959; 1009; 1091) for the framing engine based on the edit image (903; 1003); and identifying the object area based on a framing object area in which the designated object is located within the framing image (909; 959; 1009; 1091).

**13.** The method of claims 11 to 12, wherein the framing image (909; 959; 1009; 1091) is obtained by reducing or enlarging the edit image (903; 1003) in accordance with the designated aspect ratio.

**14.** The method of claims 11 to 13, wherein the object area is obtained based on coordinate information of the framing object area in which the designated object is located within the framing image (909; 959; 1009; 1091) and the edit image (903; 1003).

**15.** The method of claims 11 to 14,

wherein the preview image (401; 801; 805; 905; 955; 1005; 1087; 1101) is obtained by reducing or enlarging a portion of the edit image (903; 1003) while maintaining the designated aspect ratio, wherein the preview image (401; 801; 805; 905; 955; 1005; 1087; 1101) includes the object area, and wherein the position of the first object area is determined based on the edit image (903; 1003), a magnification of the preview image (401; 801; 805; 905; 955; 1005; 1087; 1101), and the coordinate information of the object area.

100

ELECTRONIC DEVICE 101

| INPUT MODULE 150 |
| SOUND OUTPUT MODULE 155 |

DISPLAY MODULE 160

MEMORY 130

VOLATILE MEMORY 132

NON-VOLATILE MEMORY 134

INTERNAL MEMORY 136

EXTERNAL MEMORY 138

PROGRAM 140

APPLICATION 146

MIDDLEWARE 144

OPERATING SYSTEM 142

BATTERY 189

POWER MANAGE-MENT MODULE 188

PROCESSOR 120

MAIN PROCESSOR 121

AUXILIARY PROCESSOR 123

COMMUNICATION MODULE 190

WIRELESS COMMUNICATION MODULE 192

WIRED COMMUNICATION MODULE 194

SUBSCRIBER IDENTIFICATION MODULE 196

ANTENNA MODULE 197

AUDIO MODULE 170

SENSOR MODULE 176

HAPTIC MODULE 179

CAMERA MODULE 180

INTERFACE 177

CONNECTING TERMINAL 178

SECOND NETWORK 199

ELECTRONIC DEVICE 104

FIRST NETWORK 198

ELECTRONIC DEVICE 102

SERVER 108

FIG. 1

200

CAMERA MODULE 180

LENS ASSE-MBLY 210

FLASH 220

IMAGE SENSOR 230

IMAGE STABILIZER 240

MEMORY 250

IMAGE SIGNAL PROCESSOR 260

FIG. 2

300

CAMERA(310)

MEMORY AND STORAGE DEVICE (330)

PROCESSOR(350)

DISPLAY(370)

APPLICATION(360)

PREVIEW, MAP VIEW GENERATION MODULE(361)

OBJECT DETECTION AND TRACKING MODULE(363)

ZOOM AREA CALCULATION MODULE(365)

COORDINATE TRANSFORMATION MODULE(367)

PREVIEW, MAP VIEW UPDATE MODULE(369)

USER INTERACTION MODULE(371)

OBJECT, ZOOM AREA CHANGE MODULE(373)

FIG. 3

FIG. 4

```
┌─────────────────────────────────┐
│      OBTAIN SHOOTING            │── 501
│  INFORMATION THROUGH CAMERA     │
└─────────────────────────────────┘
              │
              ▼
┌─────────────────────────────────┐
│    GENERATE FRAMING IMAGE       │── 503
└─────────────────────────────────┘
              │
              ▼
┌─────────────────────────────────┐
│  OBJECT DETECTION AND TRACKING  │── 505
└─────────────────────────────────┘
              │
              ▼
┌─────────────────────────────────┐
│      IDENTIFY PREVIEW AREA      │── 507  ◄─────────┐
└─────────────────────────────────┘                 │
              │                                       │
              ▼                                       │
┌─────────────────────────────────┐                 │
│  TRANSFORM COORDINATE INFORMATION│                 │
│ OF OBJECT AREA TO POSITION OF FIRST OBJECT │── 509 │
│ AREA AND POSITION OF SECOND OBJECT AREA    │       │
└─────────────────────────────────┘                 │
              │                                       │
              ▼                                       │
┌─────────────────────────────────┐                 │
│ GENERATE PREVIEW IMAGE AND MAP VIEW IMAGE │── 511  │
└─────────────────────────────────┘                 │
              │                                       │
              ▼                                       │
          513                                         │
         ╱────╲                      YES   ┌──────────────────┐  515
    ╱ TOUCH INPUT FOR SELECTING ╲─────────►│ CHANGE OBJECT AREA │──┘
    ╲ ANOTHER OBJECT IS RECEIVED? ╱         └──────────────────┘
         ╲────╱
           │ NO
           ▼
┌─────────────────────────────────┐
│ MONITOR WHETHER OBJECT IS CHANGED │── 517
└─────────────────────────────────┘
```

FIG. 5

```
┌─────────────────────────────────────┐
│   OBTAIN SHOOTING INFORMATION       │ ⌐ 601
│        THROUGH CAMERA               │
└─────────────────────────────────────┘
                  │
                  ▼
┌──┬──────────────────────────────┬──┐
│  │  IDENTIFY OBJECT AREA BASED ON │  │ ⌐ 603
│  │      SHOOTING INFORMATION      │  │
└──┴──────────────────────────────┴──┘
                  │
                  ▼
┌─────────────────────────────────────┐
│    DISPLAY PREVIEW IMAGE BASED ON    │ ⌐ 605
│        IDENTIFIED OBJECT AREA        │
└─────────────────────────────────────┘
                  │
                  ▼
┌─────────────────────────────────────┐
│        DISPLAY MAP VIEW IMAGE        │ ⌐ 607
└─────────────────────────────────────┘
                  │
                  ▼
┌─────────────────────────────────────┐
│  DISPLAY FIRST OBJECT AREA ON PREVIEW IMAGE │ ⌐ 609
└─────────────────────────────────────┘
                  │
                  ▼
┌─────────────────────────────────────┐
│  DISPLAY PREVIEW AREA AND SECOND OBJECT │ ⌐ 611
│        AREA ON MAP VIEW IMAGE        │
└─────────────────────────────────────┘
```

FIG. 6

```
┌─────────────────────────────────────────────┐
│ OBTAIN EDIT IMAGE IN ACCORDANCE WITH DESIGNATED │ ⌐ 701
│      ASPECT RATIO FROM SHOOTING INFORMATION     │
└─────────────────────────────────────────────┘
                        │
                        ▼
┌─────────────────────────────────────────────┐
│    OBTAIN FRAMING IMAGE BASED ON EDIT IMAGE     │ ⌐ 703
└─────────────────────────────────────────────┘
                        │
                        ▼
┌─────────────────────────────────────────────┐
│ IDENTIFY FRAMING OBJECT AREA WITHIN FRAMING IMAGE │ ⌐ 705
└─────────────────────────────────────────────┘
                        │
                        ▼
┌─────────────────────────────────────────────┐
│   IDENTIFY FIRST OBJECT AREA AND SECOND OBJECT   │ ⌐ 707
│      AREA BASED ON FRAMING OBJECT AREA          │
└─────────────────────────────────────────────┘
```

FIG. 7

FIG. 8

FIG. 9A

955

953

951

PREVIEW / MAP VIEW

APPLICATION

957

959

FRAMING

FIG. 9B

FIG. 10A

PREVIEW / MAP VIEW

APPLICATION

FRAMING

FIG. 10B

FIG. 11

FIG. 12

FIG. 13A

FIG. 13B

FIG. 14A

FIG. 14B

## INTERNATIONAL SEARCH REPORT

| | International application No. |
|---|---|
| | **PCT/KR2023/014708** |

---

### A. CLASSIFICATION OF SUBJECT MATTER

**H04N 23/63**(2023.01)i; **H04N 23/61**(2023.01)i

According to International Patent Classification (IPC) or to both national classification and IPC

### B. FIELDS SEARCHED

Minimum documentation searched (classification system followed by classification symbols)

H04N 23/63(2023.01); G03B 13/02(2006.01); H04B 1/40(2006.01); H04M 1/725(2006.01); H04N 5/225(2006.01); H04N 5/232(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 카메라(camera), 미리보기(preview), 맵뷰(map view), 얼굴(face)

### C. DOCUMENTS CONSIDERED TO BE RELEVANT

| Category* | Citation of document, with indication, where appropriate, of the relevant passages | Relevant to claim No. |
|---|---|---|
| X | KR 10-2010-0081821 A (LG ELECTRONICS INC.) 15 July 2010 (2010-07-15) <br> See paragraphs [0002]-[0226]; claims 1-43; and figures 1-26. | 1-15 |
| A | KR 10-1689171 B1 (LG ELECTRONICS INC.) 23 December 2016 (2016-12-23) <br> See paragraphs [0141]-[0150]; and figure 16. | 1-15 |
| A | KR 10-1825321 B1 (IUCF-HYU (INDUSTRY-UNIVERSITY COOPERATION FOUNDATION HANYANG UNIVERSITY)) 02 February 2018 (2018-02-02) <br> See paragraphs [0075]-[0077]; and figures 10-11. | 1-15 |
| A | KR 10-2039025 B1 (SAMSUNG ELECTRONICS CO., LTD.) 31 October 2019 (2019-10-31) <br> See paragraphs [0031]-[0094]; and figures 1-9. | 1-15 |
| A | JP 2022-002388 A (BEIJING XIAOMI MOBILE SOFTWARE CO., LTD.) 06 January 2022 (2022-01-06) <br> See claims 1-14. | 1-15 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 January 2024** | **16 January 2024** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/014708**

| Patent document cited in search report | | | Publication date (day/month/year) | Patent family member(s) | | | Publication date (day/month/year) |
|---|---|---|---|---|---|---|---|
| KR | 10-2010-0081821 | A | 15 July 2010 | CN | 101794203 | A | 04 August 2010 |
| | | | | CN | 101794203 | B | 22 October 2014 |
| | | | | EP | 2207342 | A2 | 14 July 2010 |
| | | | | EP | 2207342 | A3 | 15 July 2015 |
| | | | | EP | 2207342 | B1 | 06 December 2017 |
| | | | | KR | 10-1572887 | B1 | 30 November 2015 |
| | | | | KR | 10-2010-0106675 | A | 04 October 2010 |
| | | | | US | 2010-0173678 | A1 | 08 July 2010 |
| | | | | US | 8478347 | B2 | 02 July 2013 |
| KR | 10-1689171 | B1 | 23 December 2016 | CN | 101668119 | A | 10 March 2010 |
| | | | | CN | 101668119 | B | 18 July 2012 |
| | | | | EP | 2169946 | A2 | 31 March 2010 |
| | | | | KR | 10-1505681 | B1 | 30 March 2015 |
| | | | | KR | 10-2010-0028862 | A | 15 March 2010 |
| | | | | US | 2010-0062803 | A1 | 11 March 2010 |
| | | | | US | 8416306 | B2 | 09 April 2013 |
| KR | 10-1825321 | B1 | 02 February 2018 | | None | | |
| KR | 10-2039025 | B1 | 31 October 2019 | CN | 103795913 | A | 14 May 2014 |
| | | | | CN | 103795913 | B | 14 November 2017 |
| | | | | EP | 2728853 | A2 | 07 May 2014 |
| | | | | EP | 2728853 | A3 | 03 June 2015 |
| | | | | EP | 3236650 | A1 | 25 October 2017 |
| | | | | KR | 10-1545883 | B1 | 20 August 2015 |
| | | | | KR | 10-2110775 | B1 | 14 May 2020 |
| | | | | US | 10805522 | B2 | 13 October 2020 |
| | | | | US | 2014-0118600 | A1 | 01 May 2014 |
| | | | | US | 2016-0165133 | A1 | 09 June 2016 |
| | | | | US | 9307151 | B2 | 05 April 2016 |
| JP | 2022-002388 | A | 06 January 2022 | CN | 111241427 | A | 05 June 2020 |
| | | | | CN | 111241427 | B | 11 June 2021 |
| | | | | EP | 3826051 | A2 | 26 May 2021 |
| | | | | EP | 3879415 | A1 | 15 September 2021 |
| | | | | JP | 2021-110028 | A | 02 August 2021 |
| | | | | JP | 7170377 | B2 | 14 November 2022 |
| | | | | KR | 10-2021-0134794 | A | 10 November 2021 |
| | | | | KR | 10-2512787 | B1 | 21 March 2023 |
| | | | | US | 11594465 | B2 | 28 February 2023 |
| | | | | US | 2021-0210405 | A1 | 08 July 2021 |
| | | | | WO | 2021-139135 | A1 | 15 July 2021 |

Form PCT/ISA/210 (patent family annex) (July 2022)